# FASCICULE DE BREVET EUROPEEN

(11) **EP 2 884 430 B1**
(45) Date de publication et mention de la délivrance du brevet: **30.12.2015**
(21) Numéro de dépôt: 14196088.0
(22) Date de dépôt: 03.12.2014
(51) Int. Cl.: G06K 19/077

(54) **Support de cartes de formats multiples et à positionnement réversible stable**
Kartenträger für multiple Kartenformate und zur stabilen umkehrbaren Positionierung
Multiple-format card support with stable reversible positioning

(30) Priorité: 13.12.2013 FR 1362583
(43) Date de publication de la demande: 17.06.2015
(73) Titulaire: Plastifrance, 13881 Gemenos Cedex (FR)
(72) Inventeur: Jonveaux, Floréal, 13780 Cuges les Pins (FR)
(74) Mandataire: Domange, Maxime

(56) Documents cités:
- EP-A1- 2 309 430
- EP-A2- 0 702 325
- FR-A1- 2 853 434
- JP-A- 2005 115 840
- JP-A- 2005 293 383

## Description

Support de cartes de formats multiples et à positionnement réversible stable.

La présente invention concerne une carte support de carte à puce de formats multiples et à positionnement réversible.

On entend ici par « carte à puce » une carte à circuit intégré à contact comprenant un support réalisé par moulage en matière plastique en forme de plaque sensiblement rectangulaire comportant un creux à fond fermé renfermant un microcircuit électronique revêtu en surface de plaques métalliques de contact pour le raccordement électrique du microcircuit à un circuit d'exploitation d'un lecteur de cartes et plus particulièrement d'un téléphone mobile ou ordinateur portable. Ces cartes à puce sont aussi appelées cartes SIM (« SUBSCRIBER IDENTITY MODULE »).

Historiquement les cartes SIM se présentaient sous forme d'un grand format de type carte de crédit connues sous la référence « ID-1 » défini par la norme ISO7816 de forme rectangulaire à coins arrondis, de taille 85x54x0,82 mm utilisées pour des opérations de communication, d'identification et/ou de télébillettique. La norme définit outre les dimensions extérieures de la carte, la position relative du microcircuit porté par la carte et notamment celle des plages de contact métalliques.

Ultérieurement, il est apparu le besoin de diminuer le format de la carte notamment pour certaines applications pour les téléphones mobiles.

Un premier format réduit datant de 1999 de carte à puce dénommée mini carte SIM ou encore carte « PLUG-IN UICC » ou encore « format 2FF » selon l'ETSI (« European Telecom Standard Institute ») utilisée dans l'ensemble des téléphones mobiles standards et constituée d'une plaque support rectangulaire à coins arrondis de format 25x15x0,80 mm avec un détrompeur (en forme de biseau) de 3mm x 3mm dans un des coins, le microcircuit étant situé à un emplacement précis du support défini par la norme qui fixe cet emplacement sur le coin opposé à celui du détrompeur. Plus précisément, le détrompeur est situé sur le coin inférieur droit du support de la carte, le microcircuit étant alors placé sur le coin supérieur gauche à 1,5 mm du bord supérieur et à 4 mm du bord gauche.

Dans le cadre d'une normalisation de téléphone mobile de troisième génération de la norme GSM, un nouveau format de mini carte est apparu en 2004 sous la dénomination « PLUG 3G » ou encore « mini UICC » ou encore « format 3 FF » selon l'ETSI (« European Telecom Standard Institute ») dont les dimensions sont 15x12x0,80 mm (longueur x largeur x épaisseur) avec un détrompeur dans un des coins le plus éloigné du microcircuit intégré de 2,5 x 2,5 mm.

Les cartes 2FF et 3FF diffèrent donc par la taille extérieure du support. Dans tous les cas, le microcircuit intégré est placé dans une cavité à fond fermé ménagé dans le support de la carte.

Un dernier format de taille encore plus réduite dénommé 4FF est apparu en 2012 dans le cadre d'une normalisation de téléphone mobile de quatrième génération dénommé « PLUG 4G » ou format 4FF de dimension 12x9x0,64 mm avec un détrompeur de 1,65x1,65 mm.

Pour la carte 4FF, le microcircuit intégré et les plages de contact métalliques sont de format légèrement plus petit mais leur positionnement dans le coin opposé au détrompeur est compatible pour un raccordement électrique du microcircuit au circuit d'exploitation des téléphones mobiles dont le format de carte est 2FF ou 3FF.

Les utilisateurs de téléphonie mobile sont liés à l'utilisation d'un de ces formats qui leur est fourni lors de la souscription à un abonnement. Mais l'utilisateur peut avoir des téléphones requérant des cartes SIM de différents formats. C'est pourquoi il a été proposé des cartes multi-format, notamment des cartes susceptibles d'être utilisées selon 2 formats (2FF et 3FF) ou 3 formats (2FF, 3FF et 4FF).

On connait dans WO99/38118, FR2783948, FR2783202, une carte à puce de grand format comprenant un corps de carte rectangulaire à coins arrondis comportant une mini-carte de format 2FF qui lui est reliée mais détachable mécaniquement, ladite mini-carte étant délimitée par des encoches ou entailles (amincissement de l'épaisseur) et/ou des fentes combinées à des bretelles de liaison venant de matière avec le support de carte de plus grand format. Lesdites bretelles s'étendant entre les bords inférieurs d'une découpe formée par la ou les fentes de la carte de grand format et les bords externes en vis-à-vis de la mini-carte qui sont globalement parallèles aux bords de la carte support de grand format.

Ainsi, il est possible de transformer simplement la carte ou grande carte dite carte SIM de format ISO 7816 en une mini-carte SIM en détachant cette dernière de la carte grand format par rupture des bretelles ou ponts de liaison et/ou rupture du contour de la mini-carte délimitée par des entailles ou encoches, cette rupture pouvant être effectuée manuellement en enfonçant globalement la mini-carte selon une direction verticale perpendiculaire au plan général de la surface supérieure de la carte grand format.

Ceci permet de livrer une carte grand format à un utilisateur incorporant la mini-carte détachable pour lui permettre d'utiliser la puce avec une carte selon l'un ou l'autre des 2 formats en fonction de l'appareil récepteur dans lequel il doit introduire la carte.

Le plus généralement, la mini-carte délimitée par une ligne de contour réalisée sous la forme d'une fente de contour qui est découpée au travers de l'épaisseur de la carte de grand format et qui est interrompue en au moins un endroit pour former une bretelle de liaison entre une portion interne de support de carte aux dimensions du petit format et une portion externe aux dimensions du grand format de carte, les bretelles étant en outre pourvues d'au moins une entaille de prédécoupe qui forme une amorce de rupture de la bretelle.

Dans WO00/73989, on décrit un support au format standard d'une carte mini SIM ou 2FF muni d'une cavité sans fond ou perforation avec ou sans fond apte à recevoir une carte de format réduit de type 3FF de manière à ce que l'emplacement des plages de contact du microcircuit de la carte 3FF de format réduit coïncide avec l'emplacement normalisé des plages de contact du microcircuit d'une mini-carte au format 2FF standard.

Dans un mode de réalisation, la mini cavité de la mini-carte 2FF est percée dans toute l'épaisseur du support de la mini-carte sans fond, la cavité étant délimitée par des parois concaves dans la tranche de l'épaisseur de la perforation de la mini-carte, lesdites parois concaves étant de forme complémentaire aux parois convexes de la tranche du bord extérieur de la carte 3FF de format réduit, une telle complémentarité de forme permettant d'obtenir le maintien de la carte 3FF de format réduit dans la cavité de la mini-carte 2FF par pincement de ladite carte 3FF entre les parois de la cavité de la carte 2FF.

Ce mode de réalisation présente un premier inconvénient en ce que la carte 3FF de format réduit est difficilement correctement repositionnable dans la cavité de la mini-carte de plus grand format après retrait. En particulier, dans le mode de réalisation de WO0073989, il n'est pas facile d'ajuster le repositionnement de la carte 3FF de plus petit format au sein de la perforation de la mini-carte 2FF de manière à ce que leur surface en recto et verso affleure au même niveau car il n'y a pas de butée ou calage des cartes entre elles.

Un autre inconvénient de ce mode de réalisation décrit dans WO00/73989 tient en ce que la carte de format réduit 3FF risque d'être désolidarisée trop facilement de la mini-carte de plus grand format 2FF par pression sur l'un quelconque des côtés recto ou verso de la carte de format réduit 3FF. Et, plus généralement, cette fixation de la carte de format réduit dans la cavité de la mini-carte de plus grand format est considérée comme insuffisamment stable.

Un autre inconvénient du mode de réalisation de WO0073989 tient en ce qu'il n'est pas possible de rapporter le circuit intégré et les plages de contact métallique par-dessus la carte de plus petit format lorsque celle-ci est en position fixée dans la perforation de la carte d'une carte de plus grand format du fait d'une fixation insuffisamment stable.

La mini-carte 2FF perforée est aussi appelée « adaptateur » et elle est en général intégrée dans une carte de grand format « ID-1 » selon la norme ISO7816 au moyen d'une prédécoupe ou pré-entaille de contour détachable mécaniquement de manière irréversible par rapport à la carte de grand format.

Dans EP1626367 et WO2006/010664, on prévoit de délimiter une carte de format réduit 3FF par des entailles prédécoupées ou encoches de manière à la rendre détachable de manière irréversible soit de la perforation de la mini-carte de plus grand format 2FF au sein duquel elle est intégrée de manière détachable, soit au sein de la carte de grand format à l'extérieur de la mini-carte. Mais dans ce cas, l'utilisation de la carte 3FF de plus petit format n'est pas réversible, c'est-à-dire que ladite carte de plus petit format 3FF n'est pas repositionnable. La mini-carte 2FF perforée ne joue plus le rôle d'un adaptateur comme dans WO00/73989.

Dans EP2309430, il est décrit une mini-carte de format 2FF ou PLUG-IN UIC formant un adaptateur en ce que ladite mini-carte comporte une perforation apte à recevoir de manière réversible une carte de format réduit 3FF ou « mini-UICC ». Le risque de retrait indésirable de la carte 3FF par rapport à l'adaptateur est réduit et le repositionnement de la carte de format réduit 3FF dans la perforation de la mini-carte 2FF de plus grand format est facilité. Pour ce faire, dans EP2309430, on propose de mettre en oeuvre des éléments de calage en forme de marche dans les angles de la perforation de la mini-carte 2FF de telle sorte que la carte de format réduit 3FF de même dimension ou de dimension seulement légèrement supérieure à celle de la cavité ou perforation de la mini-carte 2FF de plus grand format repose sur lesdits éléments de calage après insertion en force dans ladite cavité depuis sa face recto. Il est précisé dans EP2309430 que ce mode de réalisation requiert la mise en oeuvre d'un matériau plastique constitutif desdites cartes présentant des propriétés mécaniques améliorées et notamment le matériau plastique étant de préférence renforcé par des fibres.

Un inconvénient de ce mode de réalisation est que la petite carte 3FF n'est pas retenue dans la cavité de plus grande carte 2FF en cas de poussée ou pression subie sur la face verso de la petite carte 3FF.

Un premier inconvénient du mode de réalisation décrit dans EP2309430 est que la matière plastique à propriété mécanique renforcée se transforme difficilement dans les moules de cartes qui ne laisse aucune trace visible du point d'injection (ou éjecteurs) sur les faces de la carte. En outre, de telles cartes ne présentent pas de propriétés d'imprimabilité et de marquage laser suffisantes, le marquage laser étant le moyen industriel de référence pour le marquage de la traçabilité sur les cartes SIM.

En pratique, la fourniture des mini-cartes de format 2FF intégrées de manière détachable au sein d'une grande carte de format ID-1 selon la norme ISO7816 vise également à offrir une surface imprimable de grande dimension apportée par la carte de grand format autour de la mini-carte 2FF servant de support de communication, de traçabilité par marquage laser et/ou de publicité. C'est pourquoi il est avantageux de fournir des cartes en matériau plastique imprimable et « lasérisable ».

D'autre part, dans EP2309430, la paroi de la tranche des bords externes de la carte de format réduit 3FF est plane et perpendiculaire à la surface supérieure principale des cartes de même que la paroi de la tranche du bord interne de la perforation de la mini-carte 2FF. Il en résulte que l'insertion de la carte de formation réduit 3FF et son retrait de la perforation de la mini-carte de format supérieur 2FF sont relativement difficiles. Enfin, on relève que la surface supérieure de la carte de format réduit 3FF dépasse au-dessus de la surface supérieure de la mini-carte 2FF.

Dans tous les modes de réalisation connus, la carte de plus petit format n'est pas bien retenue et/ou son positionnement dans la cavité de la plus grande carte n'est pas bien contrôlé. A cet égard, il faut prendre en compte que ce phénomène affecte l'usager final de la carte multi format mais surtout perturbe le rendement du procédé de fabrication et traitement de celle-ci. En effet, la carte est acheminée pas à pas entre différents postes d'impression de la surface des cartes et de collage du microcircuit, avec des cadences rapides de traitement de 5000 cartes/hr impliquant des secousses et/ou vibrations lors des déplacements et retournements multiples et brusques au cours desquels la petite carte se désolidarise trop souvent de la cavité de la grande carte.

Dans JP 2005 293383 et JP 2005 115840, on décrit un support multicartes du type décrit dans EP 2309430 comprenant des premiers éléments de calage en forme de marche à angle droit qui assurent la retenue de la petite carte dans la cavité de la plus grande carte en cas de poussée subie sur la face recto de la petite carte et des deuxièmes éléments de calage inverse également en forme de marche à angle droit qui assurent la retenue de la petite carte dans la cavité de la plus grande carte en cas de poussée sur la face verso de la petite carte. Toutefois, des éléments de calage inverse constitués de marche à angle droit ne sont pas compatibles avec une insertion de la petite carte dans la cavité de la grande carte dans le cas où celles-ci ne sont pas suffisamment flexibles et/ou si un jeu relativement important (supérieur à 0,1 mm) n'est pas réalisé. Mais, dans ce cas, la retenue de la petite carte de type 3FF dans la cavité d'une carte de plus grand format réduit de type 2FF ne serait pas suffisamment fiable pour l'insertion de la carte 3FF dans la cavité de la carte 2FF en cours de processus de fabrication de support de carte selon le but de la présente invention explicité ci-après.

Le but de la présente invention est de fournir un nouveau type de carte multi-formats avec positionnement réversible c'est-à-dire possibilité de repositionner de façon améliorée et contrôlée une carte de format réduit dans une perforation d'un adaptateur en forme de carte de plus grand format, le dit adaptateur étant lui-même solidaire d'un corps de carte principal au format ID1, sur les moyens existants d'impression, encartage et personnalisation laser pouvant être mise en oeuvre.

Un autre but de la présente invention est de fournir une carte multi-format qui intègre une carte de plus petit format de façon réversible et qui soit fabricable par moulage par injection sur la tranche de l'épaisseur de la carte pour ne pas laisser de trace d'injection sur la surface principale, de préférence réalisé à l'aide d'une matière plastique imprimable tel que de l'ABS de couleur blanche.

Un autre but de la présente invention est de fournir une carte multi format dont la carte de plus petit format n'est retirable que sur une face de l'adaptateur au sein duquel elle est insérée de manière réversible, et surtout que la petite carte ne se désolidarise pas de la cavité de la plus grande carte de manière accidentelle et non désirée notamment lors de son procédé industriel de fabrication et traitement.

Un autre but de la présente invention est de fournir une carte multi-format dont l'ensemble des cartes de différents formats qu'elle intègre affleurent toutes au même niveau de la surface supérieure (face recto) au niveau de laquelle affleurent les plages de contact métalliques munie dudit microcircuit intégré de la carte de plus petit format ou au niveau de la face opposée (face verso).

Un autre but de la présente invention est de fournir une carte multi-format dont le procédé de fabrication est le plus simple et le moins couteux possible industriellement. Plus particulièrement, un autre but de la présente invention est de réaliser une carte multi-format entièrement réalisable par moulage par injection.

Un autre but de la présente invention est de fournir des moyens de fixation réversibles de la carte de plus petit format au sein de la perforation de l'adaptateur ou carte de plus grand format qui soit compatible avec une étape de collage du module de microcircuit et plage de contact métallique sur la carte de plus petit format en position dans ladite perforation du fait de sa bonne tenue dans ladite perforation et dont l'insertion ou positionnement et le retrait s'accompagnent d'un bruit de clic lors de l'insertion ou du retrait à partir de la position correcte de positionnement par encliquetage ou décliquetage manuel par l'utilisation.

Pour ce faire, la présente invention fournit un support de cartes, de préférence un support de module de microcircuit de carte à puce de carte SIM polyvalente, comprenant au moins une première carte de format réduit, de préférence de format standard 2FF, ladite première carte étant solidaire dudit support détachable mécaniquement, de préférence au moyen d'une prédécoupe ou pré-entaille de contour détachable mécaniquement de manière irréversible par rapport au dit support, ladite première carte comprenant une première cavité sans fond, dans laquelle est adapté une deuxième carte de plus petit format que ladite première carte, la dite deuxième carte comportant une deuxième cavité, les parois de la dite première cavité et les parois de la dite deuxième carte définissant une combinaison de:
- (a) premiers éléments de calage constitués par :
   (1a) une première forme interne de chacune de deux premières parois longitudinales ou respectivement transversales de la première cavité en section dans un plan perpendiculaire à la dite direction transversale (YY') ou longitudinale (XX') de la dite première carte, s'étendant sur sensiblement toute la longueur d'au moins une des deux dites premières parois et au moins aux extrémités de l'autre dite première paroi, définissant une forme en creux du côté de la face recto de la première carte dont le fond forme une première marche interne , de préférence plate, et
   (2a) une première forme externe de chacune des deux deuxièmes parois externes longitudinales ou respectivement transversales de la deuxième carte, en section dans un plan perpendiculaire à la dite direction transversale (YY') ou respectivement longitudinale (XX') de ladite deuxième carte, de forme complémentaire, définissant une forme en creux du côté de la face verso de la deuxième carte dont le fond forme une première marche externe , de préférence plate, apte à buter contre ladite première marche interne, la dite première forme externe étant ainsi apte à s'emboiter dans la dite première forme interne et la deuxième carte étant apte à se caler dans la dite première cavité, sous l'effet d'une poussée contre la face recto de la deuxième carte vers la face recto de la première carte jusque dans la première cavité, et
- (b) des premiers crochets constitués par :
   (1b) une deuxième forme interne de chacune des deux dites premières parois transversale ou respectivement longitudinale, en section dans un plan perpendiculaire à la dite direction transversale (YY') ou respectivement longitudinale (XX') de la dite première carte, s'étendant sur une partie seulement de la longueur des dites premières parois, en saillie par rapport au reste de dites premières parois internes les comprenant et d'une longueur plus petite que les dits premiers éléments de calage, de préférence sur une partie sensiblement médiane de la longueur des deux dites premières parois, la dite deuxième forme interne définissant une forme en creux du côté de la face verso de la première carte dont le fond forme une deuxième marche interne, de préférence plate, et
   (2b) une deuxième forme externe de chacune des deux dites deuxièmes parois externes longitudinales ou respectivement transversales, en section dans un plan perpendiculaire à la dite direction transversale (YY') ou respectivement longitudinale (XX') de ladite deuxième carte, de forme en retrait par rapport au reste de dites deuxièmes parois externes les comprenant et s'étendant sur la même longueur que ladite deuxième forme interne, ladite deuxième forme externe définissant une forme en creux du côté de la face recto de la deuxième carte dont le fond forme une deuxième marche externe, de préférence plate, apte à buter contre ladite deuxième marche interne, la dite deuxième forme externe étant ainsi apte à s'emboiter dans la dite deuxième forme interne et la deuxième carte étant apte à être retenue dans la dite première cavité, sous l'effet d'une poussée contre la face verso de la deuxième carte une fois la dite deuxième carte calée dans ladite première cavité par les dits premiers éléments de calage.

Selon la présente invention, lesdits premiers crochets comprennent une partie inclinée côté face verso de ladite deuxième forme externe de ladite deuxième carte apte à glisser contre une partie inclinée face recto de ladite deuxième forme interne de ladite première cavité de la première carte, lors de l'insertion de la deuxième carte dans ladite première cavité par poussée contre la face recto de ladite deuxième carte.

Lesdits premiers éléments de calage sont aptes à retenir en butée la deuxième carte dans la première cavité lorsque la deuxième carte subit une poussée depuis sur face recto, et les dits des premiers crochets aptes à retenir la deuxième carte dans la première cavité lorsque la deuxième carte subie une poussée inverse depuis sa face verso.

Les dits premiers crochets forment des éléments de retenue inverse par rapport auxdits premiers éléments de calage en cas de poussée sur la face verso de la deuxième carte après emboitement de la deuxième carte dans la première cavité et calage par les dits premiers éléments de calage. Mais , du fait de la longueur réduite des premiers crochets par rapport aux premiers éléments de calage, les premiers crochets autorisent néanmoins l'insertion et le retrait de la deuxième carte par la face recto de la première carte par poussée contre la face recto de la deuxième carte pour l'insertion de la deuxième carte et par poussée sur face verso de la deuxième carte pour le retrait de la deuxième carte, si la poussée est suffisante pour créer une flexion des parois supportant les dits premiers éléments de calage.

On comprend que la deuxième carte se trouve serrée entre lesdits premiers éléments de calage et lesdits premiers crochets après leur mise en oeuvre.

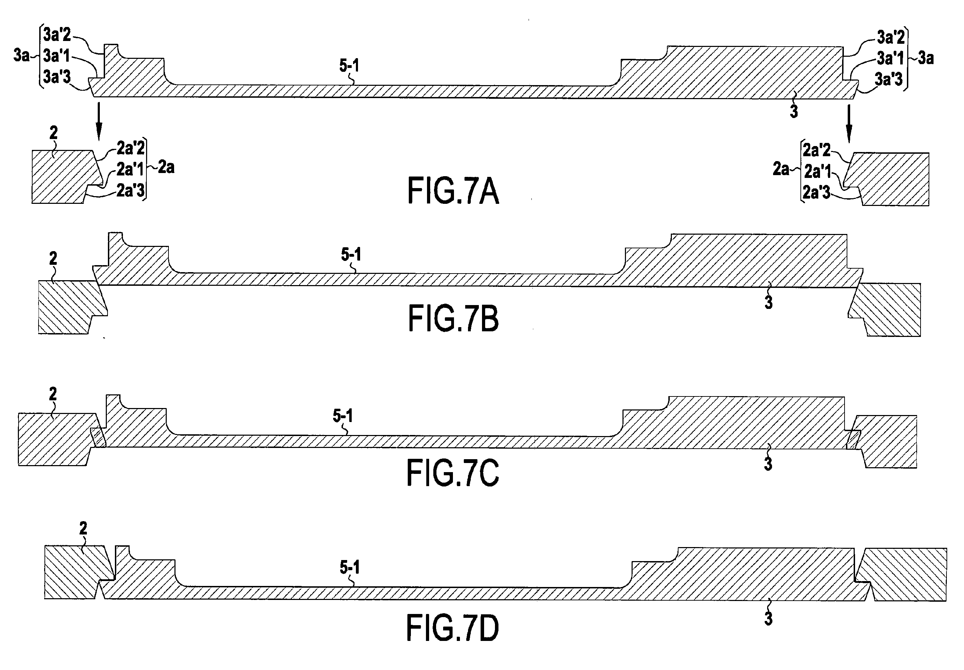

Lors de l'insertion de la dite deuxième carte dans la dite première cavité par la face recto de la première carte, par poussée sur la face recto de la dite deuxième carte :
- lesdites première et deuxième parois comprenant des dites premières formes interne et externe sont aptes à fléchir et,
- une partie côté face verso de ladite deuxième forme externe desdites deuxièmes parois de la deuxième carte, est apte à glisser contre une partie face recto de la dite deuxième forme interne, et
- ladite première marche desdits premiers éléments de calage est temporairement déformée en flexion par serrage pour autoriser le passage de ladite deuxième forme externe en retrait au-delà de ladite deuxième forme interne en saillie, sous l'effet d'une poussée contre la face recto de la deuxième carte (illustrée figures 7C-7D), réalisant ainsi la mise en oeuvre desdits premiers crochets (figure 7D).

Selon la nomenclature adoptée, la deuxième carte peut être introduite et retirée uniquement du côté de la face recto de la première carte :
- pour l'introduction, en appuyant par-dessus la face recto de la deuxième carte (de préférence face où le module de carte à puce est exposé à l'extérieur) en vis-à-vis de la première cavité, et
- pour le retrait, en appuyant par-dessous la face verso de la deuxième carte emboitée au sein de la première cavité, et en évacuant la deuxième carte vers la face recto de la première carte.

La complémentarité de forme des éléments de calage permet de réaliser tout d'abord le guidage de la deuxième carte vers ladite première cavité puis une bonne retenue et blocage empêchant la traversée de ladite première cavité et sa sortie par la face opposée à la face d'introduction et permettant d'obtenir le maintien de la carte 3FF de format réduit dans la cavité de la mini-carte 2FF en cas de poussée depuis la face recto. Les premiers crochets réalisent la retenue de la deuxième carte dans la première cavité empêchant sa sortie par la face d'introduction, par butée de ladite carte 3FF contre les éléments de premiers crochets sur parois de la cavité de la carte 2FF tout en permettant son introduction avec un cliquetage sonore par pression sur une face recto de la deuxième carte et/ou légère flexion de la première et/ou deuxième carte, et sa sortie par la face recto d'introduction par pression sur la face verso et/ou légère flexion de la première et/ou deuxième carte. On comprend donc que la mise en oeuvre desdits éléments de calage et desdits crochets réalisent un emboitement par encliquetage.

Le risque de retrait indésirable de la carte 3FF par rapport à l'adaptateur 2FF est supprimé et le repositionnement de la carte de format réduit 3FF dans la perforation de la mini-carte 2FF de plus grand format est facilité.

D'autre part, une carte ainsi configurée est plus facilement réalisable par moulage par injection, le moulage par injection étant avantageux pour une production en grand volume avec une reproductibilité de qualité.

La combinaison desdits premiers éléments de calage et premiers crochets selon l'invention réalise un compromis optimal combinant facilité d'introduction et de retrait de la deuxième carte dans la première cavité et bonne retenue de la deuxième carte dans ladite première cavité sur les deux faces.

On entend ici par « direction transversale », une direction perpendiculaire à la dite direction longitudinale.

On comprend que :
- ladite première cavité et les dites première et deuxième cartes sont de forme sensiblement rectangulaire, la dite première cavité étant délimitée par des premières parois comprenant deux premières parois longitudinales parallèles s'étendant dans la direction longitudinale (XX') de la dite première cavité et deux premières parois transversales parallèles s'étendant dans la direction transversale (YY') de la dite première cavité, de formes sensiblement complémentaires à celles de deuxièmes parois externes du bord extérieur de la dite deuxième carte comprenant deux deuxièmes parois longitudinales parallèles s'étendant dans la direction longitudinale (XX') de la dite deuxième carte et deux deuxièmes parois transversales parallèles, les dites première carte , première cavité et deuxième carte et deuxième cavité présentant une même direction longitudinale (XX') dans leur longueur et même direction transversale (YY') dans leur largeur ,et
- les dites première et deuxième cartes présentent des surfaces ou faces recto et verso parallèles à celles dudit support et de préférence présentant au moins une face recto ou verso des première et deuxième carte au niveau d'un même plan d'un des deux surfaces opposées dudit support et donc que les dits plans perpendiculaires aux dites direction longitudinales et transversale des dites cartes sont également perpendiculaires aux dites faces recto et verso des cartes concernées.

On comprend aussi les faces libres des dites première et deuxième marches interne sont tournées vers la face recto et respectivement verso de la première carte et celles des dites première et deuxième marches externes sont tournées vers la face verso et respectivement recto de la deuxième carte.

Plus particulièrement, les dites première carte, première cavité, deuxième carte, deuxième cavité et troisième carte et troisième cavité de forme sensiblement rectangulaire présentent une même direction longitudinale, et lesdites deuxième et troisième cartes sont de dimensions légèrement supérieures à celles desdites première et respectivement deuxième cavités.

Dans une première variante de réalisation, ladite deuxième carte comporte une deuxième cavité avec fond comprenant ou apte à recevoir un dit module de microcircuit de carte à puce.

Dans une deuxième variante de réalisation, ladite deuxième carte comporte une deuxième cavité sans fond de forme sensiblement rectangulaire, dans laquelle est adapté une troisième carte de plus petit format que la deuxième carte, de préférence de format standard 4FF, ladite troisième carte comportant une troisième cavité avec fond comprenant ou apte à recevoir un dit module de microcircuit de carte à puce, ladite deuxième cavité ouverte étant délimitée par des deuxièmes parois internes longitudinales et transversales de ladite deuxième cavité de forme sensiblement complémentaire à la forme de troisièmes parois externes longitudinales et respectivement transversales du bord extérieur de ladite troisième carte, lesdites troisième carte, deuxième carte et deuxième cavité présentant une même direction longitudinale (XX') dans leur longueur et même direction transversale (YY') dans leur larguer, lesdites troisième et deuxième cartes présentant au moins une surface arrivant dans un même plan que la surface recto ou verso dudit support.

De préférence, lesdites première, deuxième et éventuellement troisième cartes sont réalisées par moulage par injection en ABS séparément. L'ABS est avantageux car il est injectable et présente des propriétés optimales d'impression et de marquage laser. Autrement, on peut utiliser une matière plastique injectable choisie parmi : PET (polyestertéréphtalate), PVC (Poly Chlorure de Vinyle), PC (Polycarbonate), PA (Polyamide), PP (polypropylène).

Plus particulièrement, on utilise un ABS présentant une fluidité avec un MFI (« Melt Flow Index ») de 10 à 30 (gr/10 min), de préférence encore de 20 (gr/10 min), de couleur blanche, c'est-à-dire fortement chargé en oxyde de titane et apte au marquage.

La présente invention fournit également un procédé de fabrication d'un support selon l'invention avantageux tel que défini ci-après.

D'autres aspects, du problème ainsi que des caractéristiques et avantages de la présente invention ressortiront mieux à la lumière de la description détaillée qui va suivre, faite de manière illustrative et non limitative en référence aux dessins sur lesquels :

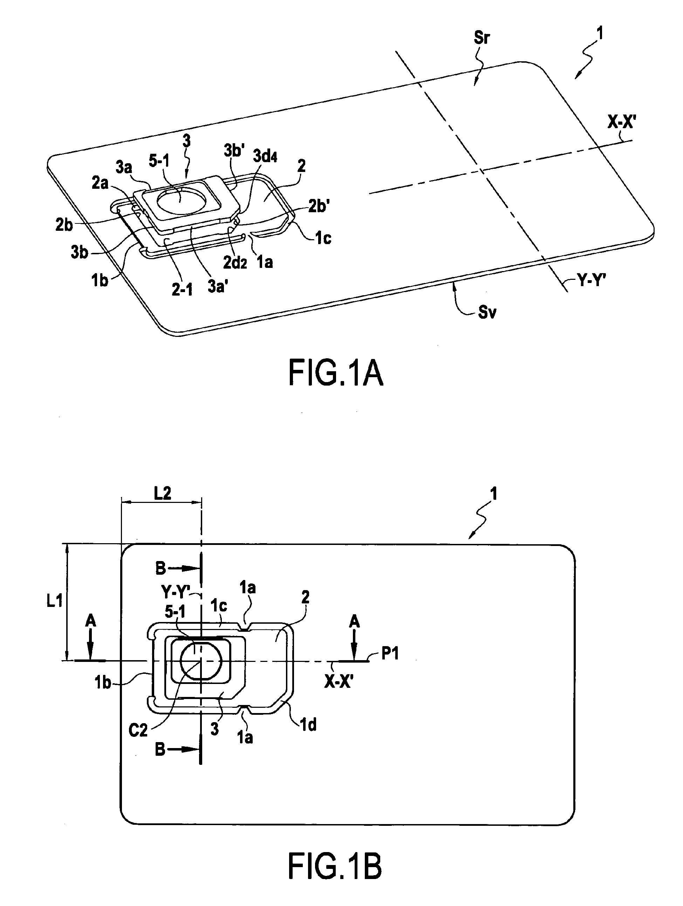

- La figure 1A représente une vue éclatée d'un premier mode de réalisation dans lequel le support 1 vient de matière avec une première carte 2 comportant une première cavité 2-1 apte à recevoir une deuxième carte 3 comportant une deuxième cavité avec fond 5-1 apte à recevoir un module de microcircuit de carte à puce ;
- La figure 1B est une vue en plan en vue de dessus de la face recto comportant le microcircuit de carte à puce de la figure 1.

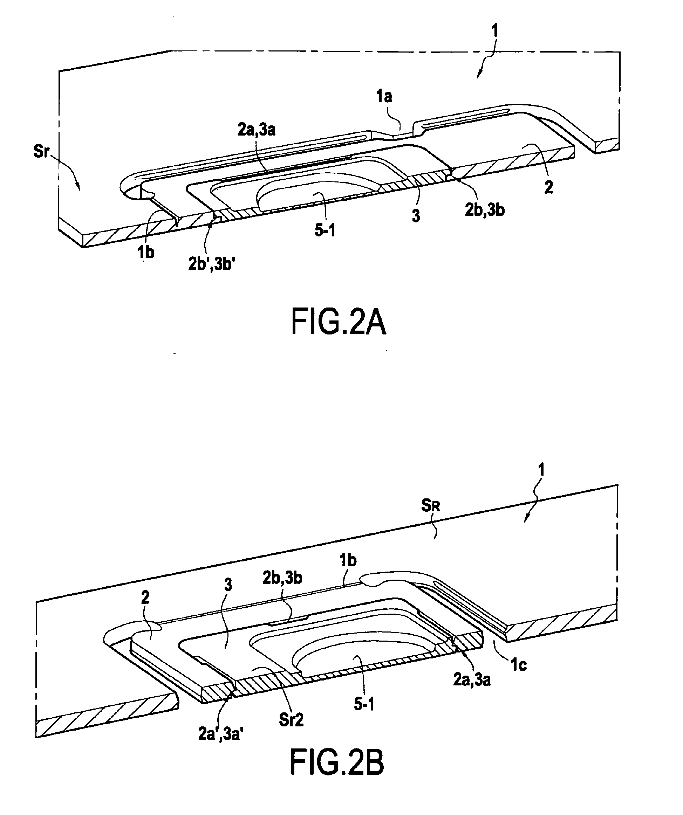

- Les figures 2A et 2B sont des vues en perspectives et coupe longitudinale selon AA de la figure 1B (figure 2A) et en coupe transversale selon BB de la figure1B (figure 2B), selon une variante de réalisation dans laquelle ladite deuxième carte présente ladite deuxième cavité 5-1 du côté de sa face recto Sr2 ;

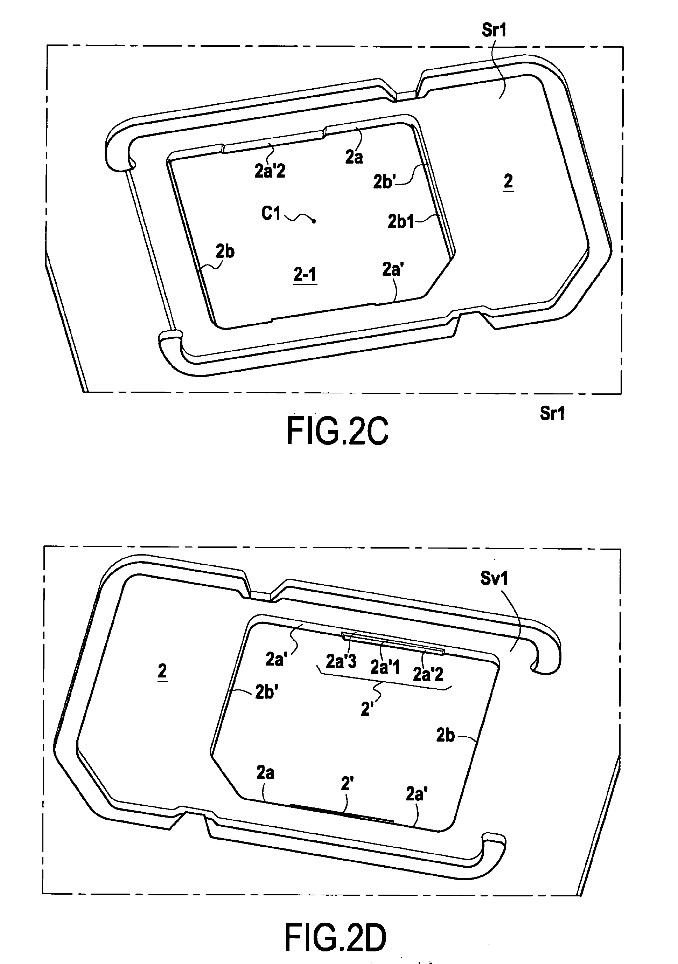

- les figures 2C et 2D sont des vues de la première carte avec sa première cavité vide, vue du côté de sa face recto figure 2C, et vue du côté de sa face verso (figure 2D;

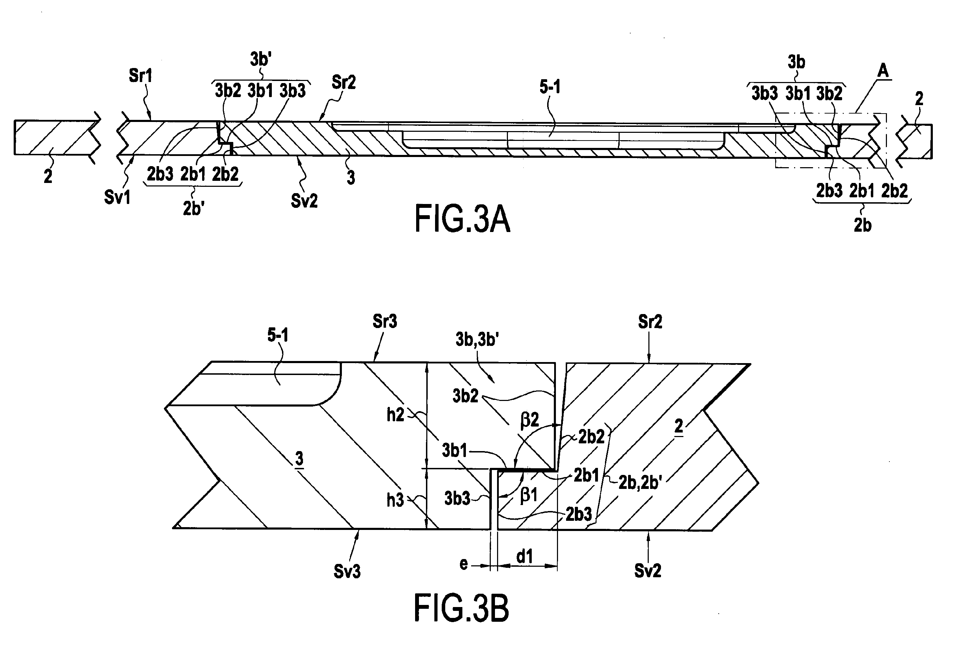

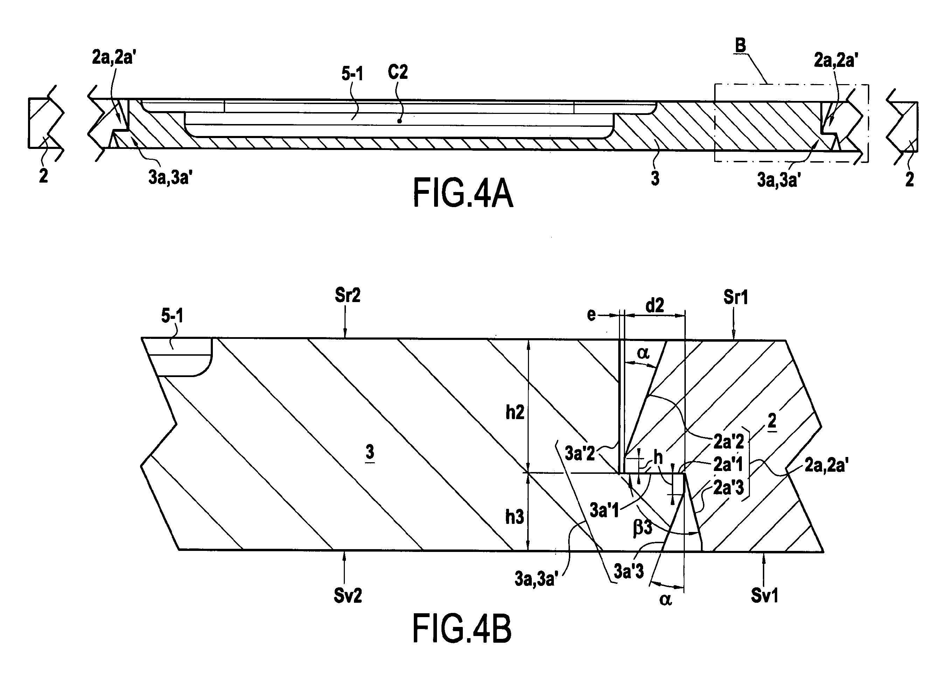

- Les figures 3A et 4A sont des vues en section en coupe AA de la figure 1B (figure 3A) et en coupe selon BB de la figure 1B (figure 4A) ;
- Les figures 3B et 4B sont des vues du détail A de la figure 3A (figure 3B) montrant desdits premiers éléments de calage à une extrémité longitudinale de la deuxième carte et du détail B de la figure 4A (figure 4B) montrant des premiers crochets à une extrémité transversale de la deuxième carte ;

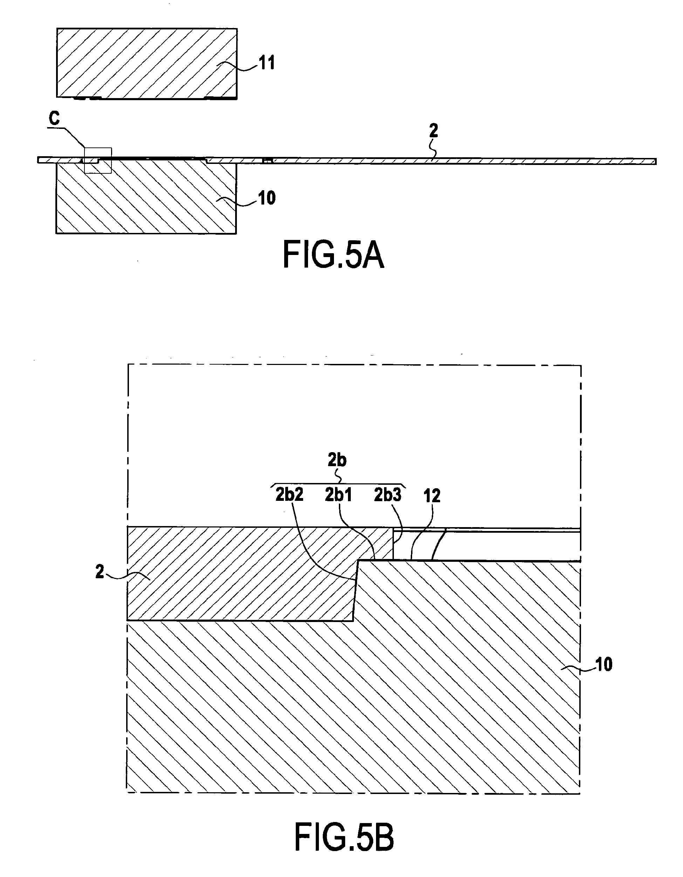

- La figure 5A est une vue en coupe longitudinale de la première carte 2 restée attachée à la partie mobile 10 du moule d'injection après séparation de la partie fixe de moule 11, la figure 5B montrant le détail C de la figure 5A avec desdits premiers éléments de calage à une extrémité longitudinale de ladite première cavité ;

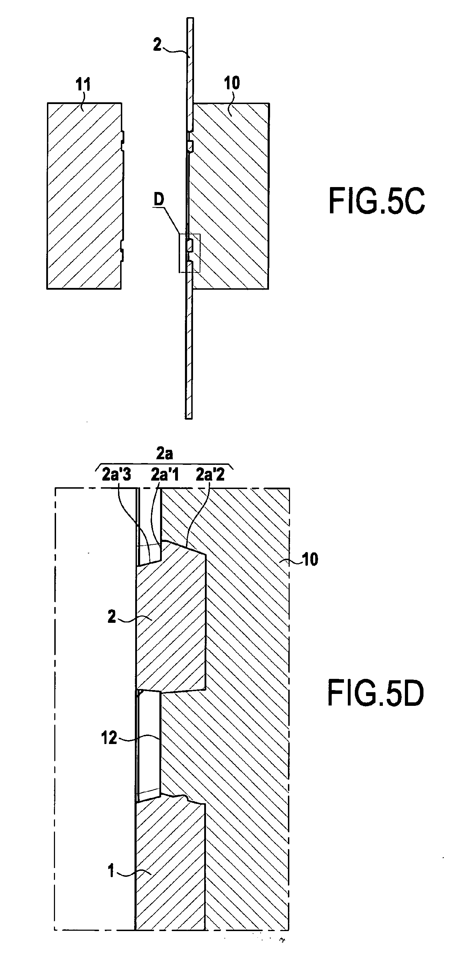

- La figure 5C est une vue en coupe transversale de ladite première carte 2 restée attachée à la partie mobile 10 du moule d'injection après séparation de la partie fixe de moule 11, la figure 5D montrant le détail D de la figure 5C desdits premiers crochets à une extrémité transversale de ladite première cavité ;

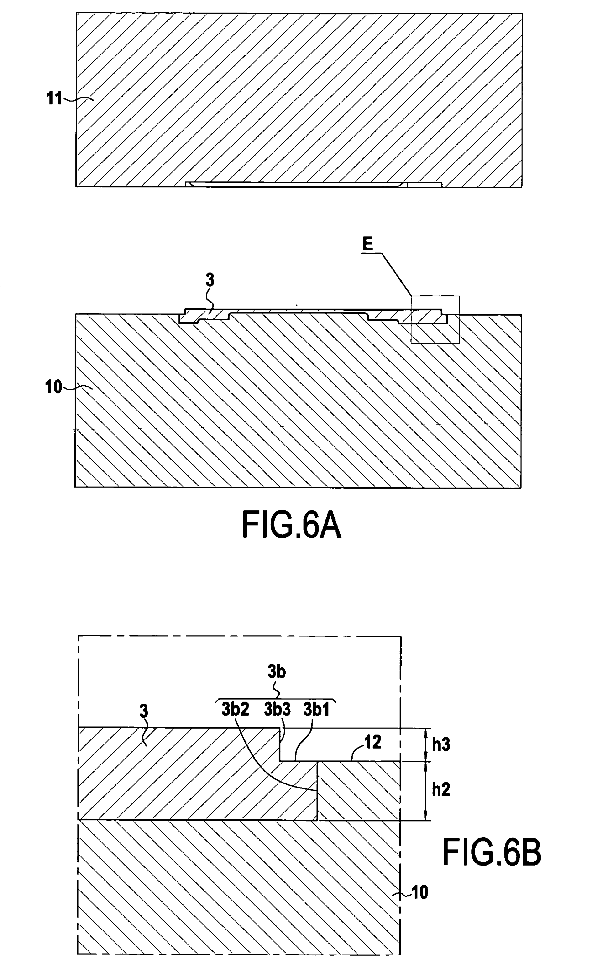

- La figures 6A est une vue en coupe d longitudinale e la deuxième carte restée attachée à la partie mobile 10 du moule d'injection après séparation de la partie fixe de moule 11, la figure 6B montrant le détail E de la figure 6A avec desdits premiers élément de calage à une extrémité longitudinale de ladite deuxième carte ;

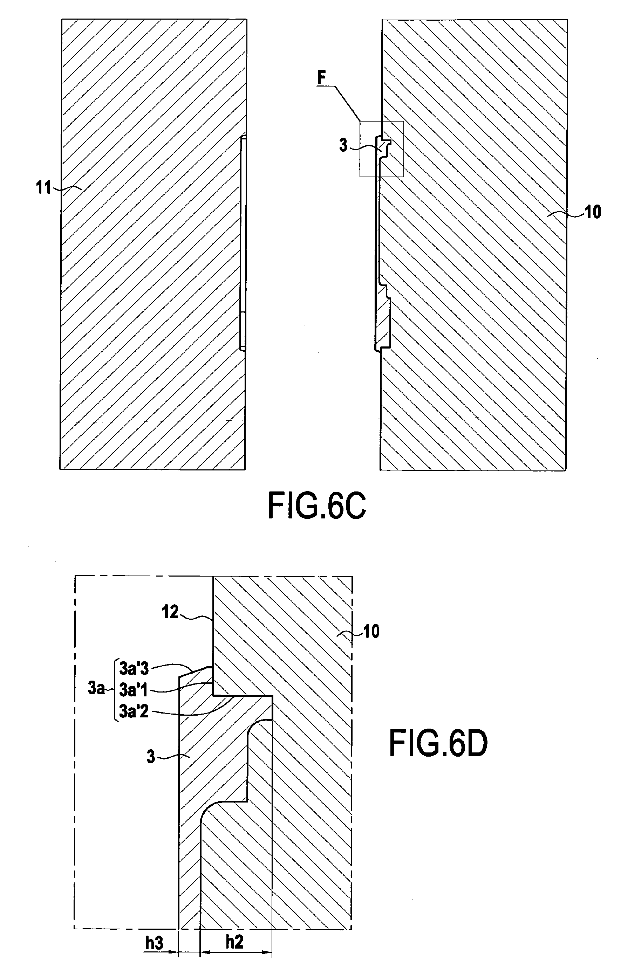

- La figures 6C est une vue en coupe transversale de la deuxième carte restée attachée à la partie mobile 10 du moule d'injection après séparation de la partie fixe de moule 11, la figure 6D montrant le détail F de la figure 6C avec desdits premiers crochets à une extrémité transversale de ladite deuxième carte ;
- les figures 7A à 7D sont des vues en coupes transversales des première et deuxième cartes lors de l'insertion de la deuxième carte dans la première cavité. A la figure 7C , le passage de la deuxième carte entre les premiers crochets de la première cavité plus étroit que la deuxième carte se fait grâce à une flexion non représentée de la deuxième carte et/ou première carte au niveau des dits premiers crochets ;

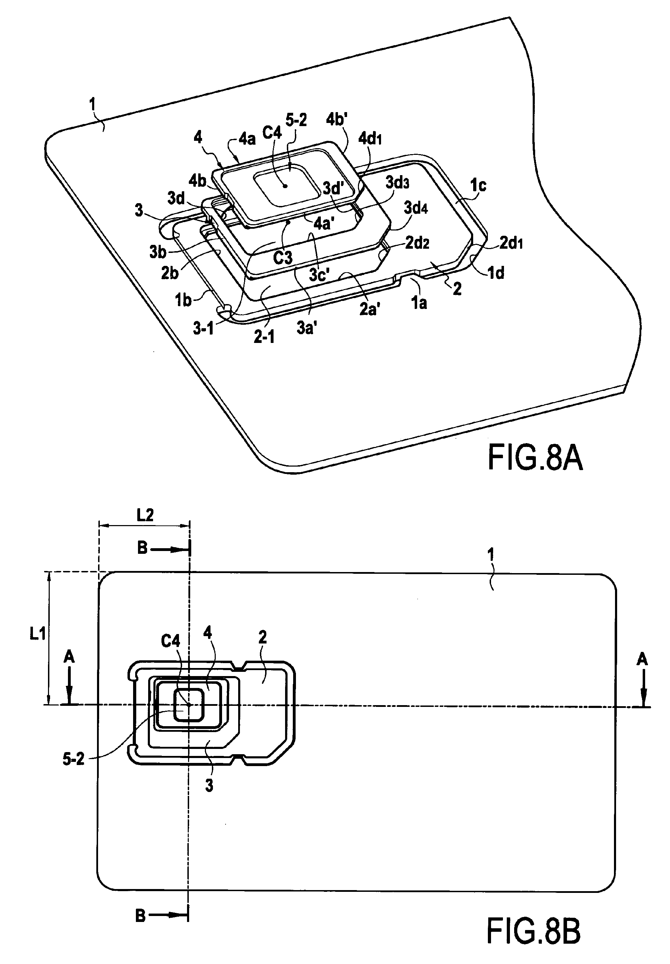

- La figure 8A est une vue en perspective et en éclatée d'une deuxième variante de réalisation d'un support selon l'invention comprenant une deuxième carte avec une cavité 3-1 ouverte au sein de laquelle peut être ajoutée une troisième carte 4 comprenant une troisième cavité fermée 5-2 apte à recevoir le microcircuit de carte à puce ;

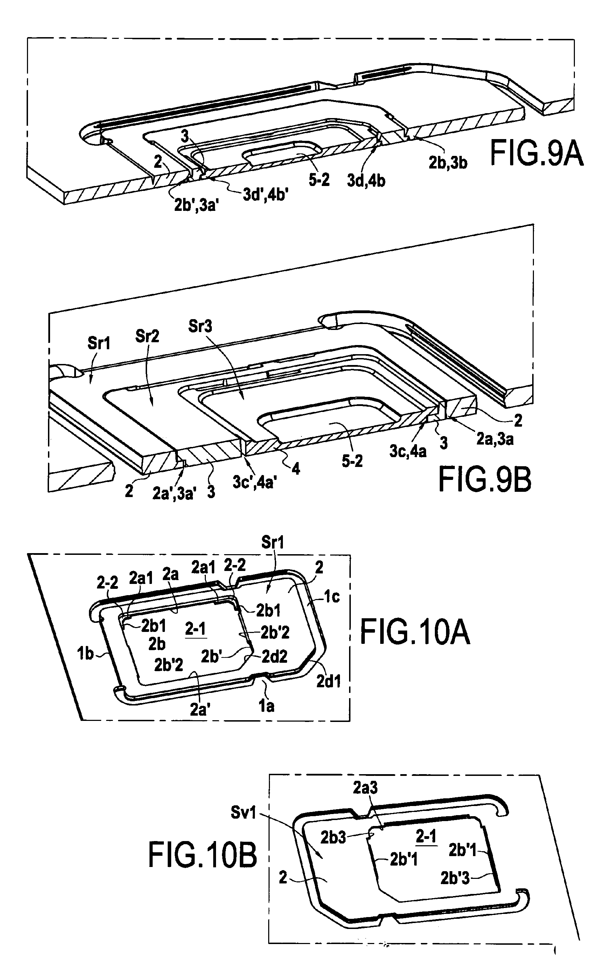

- La figure 8B est une vue en plan de dessus du support selon le mode de réalisation de la figure 9 ;
- Les figures 9A et 9B sont des vues en perspectives et coupe longitudinale selon AA de la figure 8B (figure 9A) et en coupe transversale selon BB de la figure 8B (figure 9B), selon une variante de réalisation dans laquelle ladite troisième carte présente ladite troisième cavité 5-2 du côté de sa face recto Sr3 ;
- les figures 10A et 10B sont des vues de la première carte avec sa première cavité 2-1 vide, vue du côté de sa face recto figure 10A, et vue du côté de sa face verso figure 10B ;

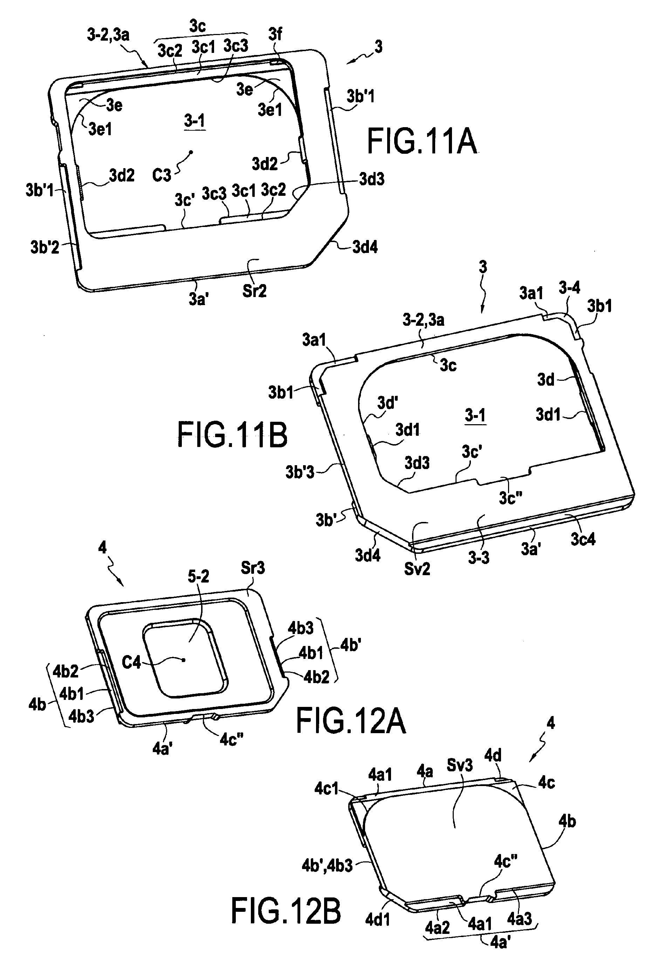

- Les figures 11A et 11B sont des vues de la face recto (figure 11A) et de la face verso (figure 11B) d'une deuxième carte 3 du mode de réalisation de la figure 9 ;
- Les figures 12A et 12B sont des vues de la face recto (figure 12A) et de la face verso (figure 12B) d'une troisième carte du mode de réalisation de la figure 9 ;

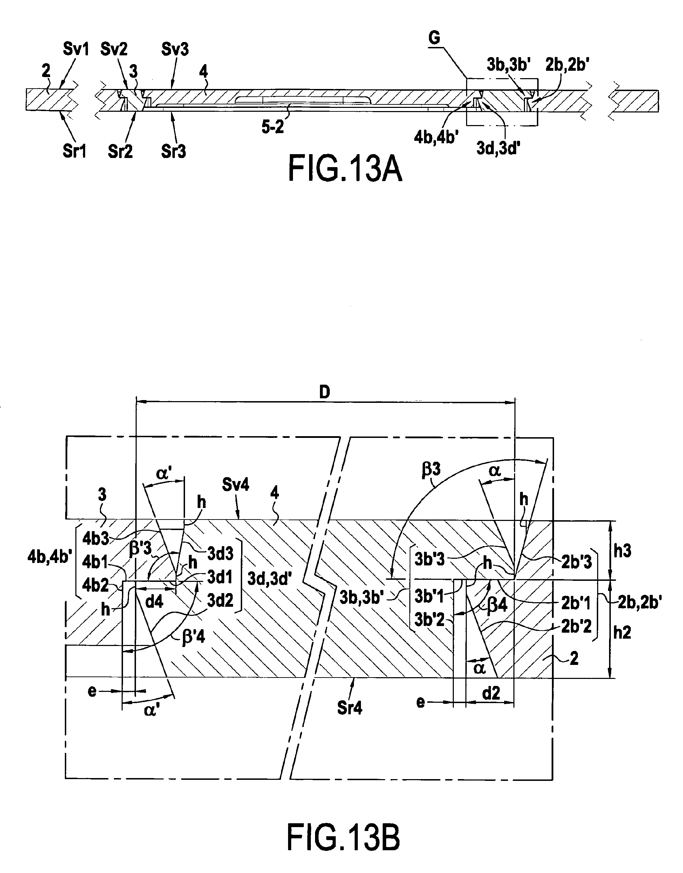

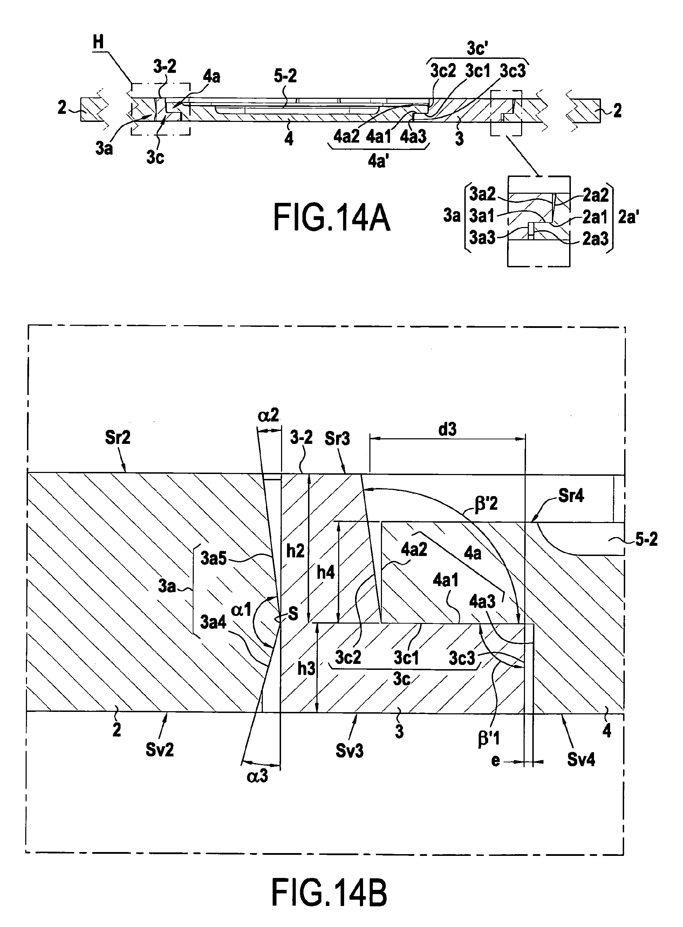

- Les figures 13A et 14A sont des vues en coupe AA (figure 13A), et coupe BB (figure 14A) de la figure 8B ;
- Les figures 13B et 14B sont des vues du détail G de la figure 13A (figure 13B) montrant desdits premiers et deuxième crochets à une extrémité longitudinale de la deuxième et respectivement troisième carte et du détail H de la figure 13B (figure 14B) montrant des deuxième éléments de calage à une extrémité transversale de la deuxième carte ;

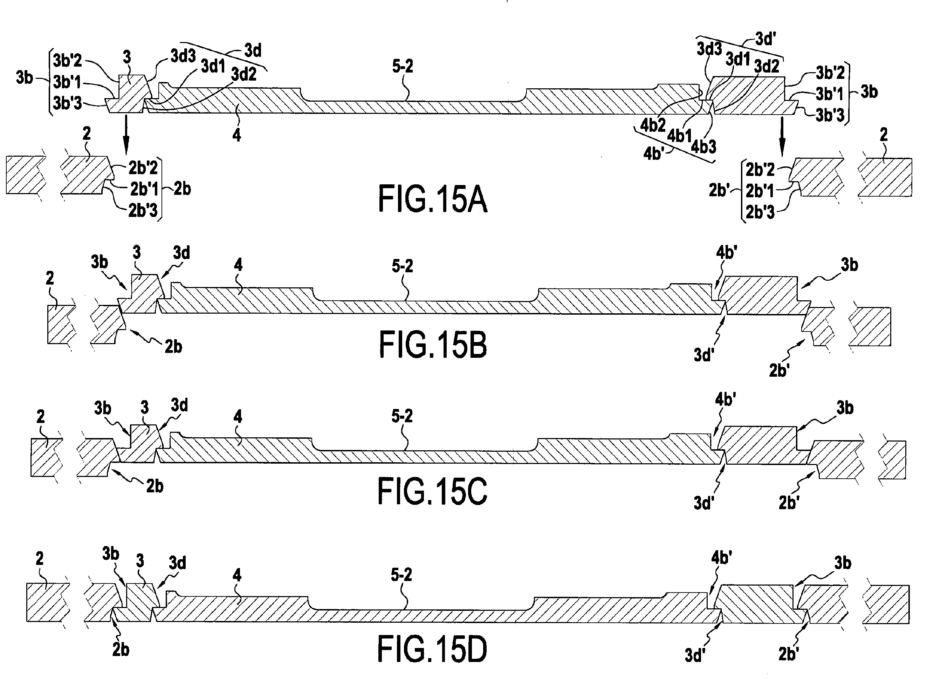

- les figures 15A à 15D sont des vues en coupes longitudinales des première et deuxième et troisième cartes lors de l'insertion de la deuxième carte dans laquelle est positionnée la troisième carte dans la première cavité. A la figure 15C, le passage de la deuxième carte entre les premiers crochets de la première cavité plus étroit que la deuxième carte se fait grâce à une flexion non représentée de la deuxième carte et/ou première carte au niveau des dits premiers crochets.

Sur les figures 1 à 15, on décrit un support de carte à puce de type carte SIM polyvalente comprenant un support 1 de grand format comprenant un corps de carte rectangulaire à coins arrondis 1 comportant une dite première carte 2 constituée d'un carte de format 2FF qui lui est reliée, notamment par des bretelles 1a, mais détachable mécaniquement, ladite première carte 2 étant délimitée par des encoches ou entailles 1b et/ou des fentes 1c combinées à des bretelles 1a de liaison venant de matière avec le support de carte de plus grand format 1, lesdites bretelles 1a s'étendant entre les bords internes d'une découpe formée par la ou les fentes au sein de la carte de grand format et les bords externes en vis-à-vis de la première carte qui sont globalement parallèles aux bords externes de la carte support de grand format.

Sur les figures 1 à 7, le support 1 de cartes de type carte SIM polyvalente comprend une première carte de format réduit 2, de format standard 2FF, comprenant une première cavité sans fond 2-1 de forme sensiblement rectangulaire, dans laquelle est adapté une deuxième carte 3 de plus petit format que la première carte, de format standard 3FF, la dite deuxième carte 3 comportant une deuxième cavité avec fond 5-1 de forme sensiblement rectangulaire apte à recevoir un dit module de microcircuit de carte à puce.

La dite première cavité 2-1 est délimitée par deux premières parois longitudinales parallèles 2a, 2a' s'étendant dans la direction longitudinale XX' de la dite première cavité et deux premières parois transversales parallèles 2b, 2b' s'étendant dans la direction transversale YY' de la dite première cavité perpendiculaire à la dite direction longitudinale de la dite première cavité. Le bord extérieur de la dite deuxième carte 3 comprend deux deuxièmes parois longitudinales parallèles 3a, 3a' s'étendant dans la direction longitudinale XX' de la dite deuxième carte et deux deuxièmes parois transversales parallèles 3b, 3b' s'étendant dans la direction transversale YY' de la dite deuxième carte perpendiculaire à la dite direction longitudinale de la deuxième carte. Les dites première carte, première cavité et deuxième carte et deuxième cavité présentant une même direction longitudinale XX' dans leur longueur et même direction transversale YY' dans leur largeur et présentant au moins une face recto ou verso qui arrivent toutes au niveau d'un même plan Sr, Sv du support 1.

Les distances maximales entre deux dites premières parois longitudinales opposées 2a, 2a' et respectivement entre deux dites premières parois transversales opposées 2b, 2b' de la première cavité sont légèrement inférieures (de 0.02 à 0.01 mm) par rapport aux distances maximales entre deux dites deuxièmes parois externes longitudinales opposées et respectivement entre deux dites deuxièmes parois externes transversales opposées de la deuxième carte, en dehors des premiers crochets décrits ci-après.

Les dites premières parois 2a-2a',2b-2b' et deuxième parois externes 3a-3a',3b-3b' définissent une combinaison :
(a) de dits premiers éléments de calage constitués par :
   (1a) la dite première forme interne définissant une dite première marche interne 2a1,2b1 de chacune des deux dites premières parois longitudinales 2a,2a' ou respectivement transversales 2b,2b', s'étendant entre et parallèlement aux deux surfaces opposées Sr1,Sv1 de ladite première carte 2, sur sensiblement toute la longueur d'au moins une des deux dites premières parois longitudinales ou respectivement transversales et au moins aux extrémités de l'autre dite première paroi longitudinale ou respectivement transversale, disposée entre une première contre marche interne plate verso 2a3,2b3 s'étendant du côté de la dite première marche interne le plus proche du centre C1 de la dite première cavité jusqu'à la surface verso Sv1 de la dite première carte, et une première contre marche interne plate recto 2a2,2b2 s'étendant du côté de la dite première marche interne le plus éloigné du centre C1 de la dite première cavité jusqu'à sa surface recto Sri, et
   (2a) la dite première forme externe définissant une dite première marche externe 3a1,3b1 de chacune des deux dites deuxièmes parois externes longitudinales ou respectivement transversales, disposée entre une première contre marche externe plate verso 3a3 ,3b3 s'étendant du côté de la dite première marche externe 3a1,3b1 le plus proche du centre C2 de la dite deuxième carte jusqu'à la surface verso Sv2 de la dite deuxième carte, et une première contre marche externe plate recto 3a2,3b2 s'étendant du côté de la dite première marche externe le plus éloigné du centre C2 de la dite deuxième carte jusqu'à sa surface recto Sr2, les dites premières contre marches externes recto et verso 3a2-3b2,3a3-3b3 étant disposées en vis-à-vis des et/ou en butée contre les dites premières contre marches internes recto et respectivement verso 2a2-2b2,2a3-2b3, , les dites premières marches externes 3a1,3b1 s'étendant sensiblement à une même distance h2,h3 des surfaces opposées Sr, Sv dudit support que les dites premières marches internes 2a1,2b1, après ledit emboitement, et
-(b) des dits premiers crochets constitués par :
   (1b) la dite deuxième forme interne en saillie définissant une dite deuxième marche interne plate 2a1',2b1' de chacune des deux dites premières parois transversale 2b,2b' ou respectivement longitudinale 2a,2a', s'étendant entre et parallèlement aux deux surfaces opposées Sr1,Sv1 de ladite première carte, sur une partie seulement de la longueur des dites premières parois, de préférence sur une partie sensiblement médiane, disposée entre une deuxième contre marche interne plate verso 2a3',2b3' s'étendant du côté de la dite deuxième marche interne le plus proche du centre C1 de la dite première cavité jusqu'à la surface verso Sv1 de la dite première carte de préférence en s'éloignant dudit centre, et une deuxième contre marche interne plate recto 2a2',2b2' s'étendant du côté de la dite deuxième marche interne le plus éloigné du centre C1 de la dite première cavité jusqu'à la surface recto Sri de la dite première carte en s'éloignant dudit centre de la première cavité, et
   (2b) la dite deuxième forme externe en retrait définissant une dite deuxième marche externe plate 3a1',3b1' de chacune des deux dites deuxièmes parois externes longitudinales ou respectivement transversales, disposée entre une deuxième contre marche externe plate verso 3a3',3b3' s'étendant du côté de la dite deuxième marche externe le plus proche du centre de la dite deuxième carte jusqu'à sa surface verso Sv2 en se rapprochant dudit centre C2 de la deuxième carte , et une deuxième contre marche externe plate recto 3a2',3b2' s'étendant du côté de la dite deuxième marche externe le plus éloigné du centre C2 de la dite deuxième carte jusqu'à sa surface recto Sr2, les dites deuxièmes contre marches externes recto 3a2'-3b2'et respectivement verso 3a3'-3b3' étant disposées en vis-à-vis des dites deuxièmes contre marches internes recto 2a2'-2b2' et respectivement verso 2a3'-2b3', la dite deuxième marche externe 3a1',3b1' s'étendant sensiblement à une même distance h2 et h3 des surfaces opposées Sr et respectivement Sv dudit support que la dite deuxième marche interne 2a1',2b1' après ledit emboitement, et les dite deuxième contre marche interne recto 2a2' et dite deuxième contre marche externe verso 3a3' étant inclinées parallèlement d'un même angle α de 20 à 60° par rapport à la verticale, de manière à autoriser le glissement en butée de la dite deuxième contre marche externe verso 3a3' contre ladite deuxième contre marche interne recto 2a2' puis la flexion desdites premières et deuxièmes parois comprenant des dites premières formes interne et externe, lors de l'insertion de la dite deuxième carte dans la dite première cavité par poussée contre la face recto Sr2 de la dite deuxième carte, avant un dit emboitement.

La dite première forme interne est donc une forme en creux du côté de la face recto Sr1 de la première carte dont le fond forme une dite première marche interne 2a1, 2b1 dont la face libre est tournée vers la face recto de la première carte. Ladite première forme externe définit une forme en creux du côté de la face verso Sv2 de la deuxième carte dont le fond forme une dite première marche externe 3a1, 3b1 dont la face libre est tournée vers la face verso de la deuxième carte. La dite deuxième carte est ainsi apte à s'emboiter et se caler dans la dite première cavité après positionnement de la dite deuxième carte dans ladite première cavité, sous l'effet d'une poussée contre la face recto Sr2 de la deuxième carte vers la face recto Sr1 de la première carte jusque dans la première cavité. Les dits premiers éléments de calage sont donc des éléments aptes à retenir en butée la deuxième carte 3 dans la première cavité 2 lorsque la deuxième carte subit une poussée depuis sa face recto vers sa face verso.

La dite deuxième forme interne est en saillie par rapport par rapport au reste de dites premières parois internes les comprenant et d'une longueur plus petite que les dits premiers éléments de calage. D'autre part, ladite deuxième forme interne définit une forme en creux du côté de la face verso Sv1 de la première carte dont le fond forme une dite deuxième marche interne 2a1',2b1' dont la face libre est tournée vers la face verso de la première carte.

Ladite deuxième forme externe est en retrait par rapport au reste de dites deuxièmes parois externes les comprenant et s'étend sur la même longueur que ladite deuxième forme interne. D'autre part, ladite deuxième forme externe définit une forme en creux du côté de la face recto Sr2 de la deuxième carte dont le fond forme une dite deuxième marche externe 3a1',3b1' dont la face libre est tournée vers la face recto de la deuxième carte.

Les dits premiers éléments crochets sont ainsi aptes à retenir la deuxième carte dans la première cavité lorsque la deuxième carte subie une poussée inverse depuis la face verso vers la face recto. Ladite deuxième marche interne 2a1' est apte à buter contre ladite deuxième marche externe 3a1',3b1' et la dite deuxième carte est ainsi apte à s'emboiter et se caler dans la dite première cavité après positionnement de la dite deuxième carte dans ladite première cavité , sous l'effet d'une poussée contre la face verso Sv2 de la deuxième carte une fois la dite deuxième carte calée contre les dits premiers éléments de calage dans ladite première cavité, lesdites premières et deuxièmes parois comprenant des dites premières formes interne et externe étant aptes à fléchir et une partie 3a3' côté face verso de ladite deuxième forme externe étant aptes à glisser contre une partie 2a2' face recto de la dite deuxième forme interne, lors de l'insertion de la dite deuxième carte dans la dite première cavité par la face recto de la première carte, par poussée sur la face recto de la dite deuxième carte.

On comprend que :
- les deux premières contre marches internes recto et verso plates s'étendent dans la direction longitudinale ou respectivement transversale de la première carte sur toute la longueur et de part et d'autre de la largeur (d1=0.3 à 0.5mm) des dites première marche interne et,
- les deux premières contre marches externes recto et verso plates s'étendent dans la direction longitudinale ou respectivement transversale de la deuxième carte, sur toute la longueur et de part et d'autre de la largeur des dites première marche externe,
- lesdites première marche externe et premières contremarches externes recto et verso sont de formes complémentaires et dimensions sensiblement identiques auxdites premières marches et respectivement contre marches internes aptes à buter les unes contre les autres et s'emboiter après positionnement de la dite deuxième carte dans ladite première cavité , chaque dite première marche externe 3a1,3b1 reposant contre et étant retenue par une dite première marche interne 2a1,2b1 sous l'effet d'une poussée contre la face recto Sr2 de la deuxième carte dans la première cavité,
- la dite première marche externe 3a1,3b1 et les dites premières contre marches externes recto et respectivement verso 3a2-3a3, 3b2-3b3 s'étendent sur la même longueur que, et parallèlement à, les dites premières marches internes 2a1,2b1 et respectivement dites premières contre marches internes recto et respectivement verso 2a2-2b2, 2a3-2b3 , les dites premières marches externes 3a1,3b1 s'étendant sensiblement sur une même largeur (d1+e, e étant inférieur à 1/5 de d1, notamment e=0.01 à 0.1mm) que les dites premières marches internes 2a1,2b1 et les dites premières contre marches externes recto 3a2-3a3 et verso 3b2-3b3 s'étendant sur une même hauteur h2=0.3mm,h3=0.5mm que les dites premières contre marches internes recto 2a2-2b2 et respectivement verso 2a3-2b3,
- les deux deuxièmes contre marches internes recto et verso plates s'étendent dans la direction transversale ou respectivement longitudinale de la première carte sur toute la longueur et de part et d'autre de la largeur (d2=0.3 à 0.4 mm) de la dite deuxième marche interne et,
- les deux deuxièmes contre marches externes recto et verso plates s'étendent dans la direction transversale ou respectivement longitudinale de la deuxième carte sur toute la longueur et de part et d'autre de la largeur de la dite deuxième marche respectivement externe,
- lesdites deuxièmes marche externe et contremarches externes recto et verso sont de formes complémentaires et dimensions sensiblement identiques auxdites deuxième marche interne et respectivement contre marches internes recto et verso, aptes à buter les unes contre les autres et s'emboiter après positionnement de la dite deuxième carte dans ladite première cavité , chaque dite deuxième marche externe 3a1',3b1' reposant contre et étant retenue par une dite deuxième marche interne 2a1',2b1' sous l'effet d'une poussée contre la face verso Sv2 de la deuxième carte dans la première cavité une fois la dite deuxième carte calée contre les dits premiers éléments de calage dans ladite première cavité,
- la dite deuxième marche externe 3a1',3b1' s'étend parallèlement à et sur la même longueur et sensiblement même largeur (d2+e, e étant inférieur à 1/5 de d2, e=0.01 à 0.1 mm) que la dite deuxième marche interne 2a1',2b1' après ledit emboitement,
- les dites deuxième contre marche externe verso et deuxième contre marche interne recto sont inclinées de manière à ne pas dépasser dans la dite direction transversale ou respectivement longitudinale, l'extrémité de ladite deuxième marche externe et respectivement deuxième marche interne depuis lesquelles elles s'étendent. En d'autres termes, l'extrémité de la dite deuxième contre marche externe verso est plus proche du centre de la première cavité que l'extrémité de la deuxième marche externe depuis laquelle elle s'étend, et l'extrémité de la dite deuxième contre marche interne recto est plus éloignée du centre de la première cavité que l'extrémité de la deuxième interne depuis laquelle elle s'étend ;
- lors de l'insertion de la dite deuxième carte dans la dite première cavité par poussée de la dite deuxième carte depuis sa face recto vers sa face verso, la deuxième carte subit une flexion qui autorise que la dite deuxième contremarche externe verso et la dite deuxième marche externe passent sous la dite deuxième marche interne et soit retenue par elle en cas de poussée en sens inverse,
- les dites deuxième contre marche externe recto 3a2' et deuxième contre marche interne verso 2a3' sont droites ou inclinées pour autant qu'elles ne s'opposent pas à la dite insertion de la dite deuxième carte dans la dite première cavité par poussée de la dite deuxième carte depuis sa face recto vers sa face verso,
- En dehors des dits premiers crochets, les distances maximales entre deux dites premières parois longitudinales opposées 2a, 2a' et respectivement entre deux dites premières parois transversales opposées 2b, 2b' de la première cavité sont ajustées ou légèrement inférieures aux distances maximales entre deux dites deuxièmes parois externes longitudinales opposées 3a-3a' et respectivement entre deux dites deuxièmes parois externes transversales opposées 3b-3b' de la deuxième carte.

Plus particulièrement, les dits premiers éléments de calage et dits premiers crochets comprennent:
- desdites premières contremarches externes recto 3a2-3b2 et verso 3a3-3b3 s'étendant perpendiculairement à ladite première marche externe (3a1,3b1), la dite première contre marche interne verso 2a3,2b3 étant disposée perpendiculairement ou d'un angle β1 inférieure à 90° , de préférence de 85 à 90°, par rapport à la dite première marche interne 2a1,2b1, et la dite première contre marche interne recto 2a2, 2b2 est inclinée d'un angle β2 supérieur à 90°, de préférence de 92 à 98°, par rapport à la dite première marche interne 2a1,2b1, et
- une dite deuxième contre marche interne verso 2a'3,2b'3 s'étendant perpendiculairement ou d'un angle β3 supérieur à 90°, de préférence de 92 à 98°, par rapport à ladite deuxième marche interne 2a1', 2b1', ladite deuxième contre marche externe recto 3a2',3b2' s'étendant perpendiculairement ou d'un angle β4 supérieur à 90°, de préférence de 92 à 98°, par rapport à ladite deuxième marche externe 3a1', 3b1'.

De préférence encore, les dites première et deuxième marches internes 2a1-2b1, 2a2-2b2 et des dites première et deuxième marches externes 3a1-3b1, 3a2-3b2 s'étendent sensiblement à une même distance h2 de la face recto des dites premières et deuxièmes cartes différente de, de préférence supérieure à, leur même distance h3 par rapport la face verso des dites première carte et respectivement deuxième carte.

Ces caractéristiques sont avantageuses pour réaliser lesdites cartes par moulage par injection avec deux parties de moules, à savoir une partie fixe et une partie mobile présentant un plan de joint correspondant sensiblement au plan desdites première et deuxième marches internes et externes.

En particulier, la caractéristique de différence des hauteurs h2 et h3 est avantageuse pour réaliser lesdites cartes par moulage par injection avec deux parties de moules, partie fixe et partie mobile, et lorsque l'on souhaite que la carte reste dans l'une des deux parties de moule après espacement des deux partie de moules après injection. En effet, dans ce cas, la matière injectée adhère davantage à la partie du moule qui présente la surface de contact avec la matière la plus importante et y reste solidaire lorsque l'on sépare les deux parties de moules après injection comme montré figure 5A à 5D.

Plus particulièrement, des dits premiers crochets 2a1'-2a2', 3a1'-3a2' s'étendant sur au moins 10%, de préférence de 20 à 60%, en partie centrale de la longueur des dites premières parois et deuxièmes parois externes.

Lorsque la dite deuxième carte 3 comporte une deuxième cavité avec fond 5-1 comprenant ou apte à recevoir un dit module de microcircuit de carte à puce, de préférence, ledit support comprend:
(a) desdits premiers éléments de calage comprenant une dite première marche interne 2b1 et dite première marche externe 3b1 s'étendant continument parallèlement à la surface du dit support sur sensiblement toute la longueur des deux dites premières parois transversales 2b,2b' et respectivement deuxièmes parois externes transversales (3b,3b'), et
-(b) des dits premiers crochets 2a1'-2a2', 3a1'-3a2' s'étendant dans ladite direction longitudinale (XX') sur au moins 20%, de préférence de 30 à 50%, en partie centrale de la longueur des dites premières parois longitudinales et deuxièmes parois externes longitudinales.

Ce mode de réalisation est préféré car la retenue de la deuxième carte par les premiers crochets entre les deux premières parois longitudinales et entre les deux deuxièmes parois longitudinales est plus efficace car elles sont plus rapprochées entre elles que les deux premières parois transversales et respectivement que les deux deuxièmes parois transversales ; tandis que le calage le long des parois transversales est suffisant pour assurer le calage empêchant la sortie vers la face verso

Le mode de réalisation décrit ci-dessus est particulièrement approprié pour permettre une fabrication de la première et deuxième carte comme représenté sur les figures 5 et 6 dans lequel que lesdites première carte et deuxième carte sont réalisées par moulage par injection chacune séparément à l'aide de deux parties de moule, de préférence une partie mobile 10 et une partie fixe 11, avec un plan de joint 12 coïncidant au moins avec lesdites premières marches internes 2a1,2b1 et externes 3a1,3b1 des premiers éléments de calage et , dites deuxième marches internes 2a'1 et externes 3a'1 des premiers crochets.

La caractéristique de différence des hauteurs h2 et h3 est avantageuse pour réaliser lesdites cartes par moulage par injection avec deux parties de moules, partie fixe et partie mobile, et permet que la carte reste dans l'une des deux parties de moule après espacement des deux partie de moules après injection. En effet, dans ce cas, la matière injectée adhère davantage à la partie du moule comportant la plus grande surface de contact avec la matière et y reste solidaire lorsque l'on sépare les deux parties de moules après injection. En l'espèce, la matière adhère à la partie mobile de moule avec un creux de hauteur h3 et présentant des noyaux positifs qui moulent la cavité.

Le positionnement correct de la deuxième carte 3 dans la première cavité pour respecter que l'emplacement des plages de contact du microcircuit coïncide avec l'emplacement normalisé des plages de contact du microcircuit est sécurisé par la création de détrompeur 2d2 et 3d4 réalisés par troncature en biseau d'un des angles des première cavité et deuxième carte. Le centre de la plage de contact au centre C2 de la deuxième cavité est positionné avec L1=22,62mm et L2=15,06 mm.

Sur les figures 7A à 7D, on a représenté la cinématique d'insertion d'une deuxième carte 3 dans une première cavité. A la figure 7C, on a représenté ladite deuxième carte 3 horizontalement. Mais, on comprend qu'il s'agit d'une représentation schématique car en réalité pour autoriser le passage de la deuxième marche externe 3a'1 en dessous de la deuxième marche interne 2a'1, la deuxième carte 3 subit une flexion en courbure au niveau desdites deuxièmes parois supportant ladite première forme externe desdits premiers éléments de calages de la deuxième carte, d'une part, et d'autre part, comme précédemment indiqué, ladite mise en oeuvre desdits premiers crochets se fait concomitamment ou légèrement après la mise en place desdits premiers éléments de calage de telle sorte que ladite première marche desdits premiers éléments de calage est temporairement déformée en flexion et se courbe pour autoriser le passage et la mise en oeuvre desdits premiers crochets, avant de reprendre sa position horizontale de sorte que la deuxième carte se trouve serrée entre lesdits premiers éléments de calage et lesdits premiers crochets après leur mise en oeuvre.

Sur les figures 8 à 15, on a représenté un mode de réalisation avec 3 cartes dans lequel la dite deuxième carte 3 comporte une deuxième cavité sans fond 3-1 de forme sensiblement rectangulaire, dans laquelle est adapté une troisième carte 4 de plus petit format que la deuxième carte, de format standard 4FF, la dite troisième carte 4 comportant une troisième cavité avec fond 5-2 comprenant ou apte à recevoir un dit module de microcircuit de carte à puce. La dite deuxième cavité ouverte 3-1 est délimitée par des deuxièmes parois internes longitudinales 3c, 3c' et deuxièmes parois internes transversales 3d, 3d' de la dite deuxième cavité 3-1 de forme sensiblement complémentaire à la forme de troisièmes parois externes longitudinales 4a, 4a' et respectivement troisièmes parois externes transversales 4b,4b' du bord extérieur de la dite troisième carte 4. Les dites troisième carte 4, deuxième carte 3 et deuxième cavité 3-1 présentent une même direction longitudinale XX' dans leur longueur et même direction transversale YY' dans leur largueur. La troisième carte 4 est moins épaisse que la deuxième carte 3, la troisième carte présentant ici une épaisseur de h2+h4 avec h4=0.34, tandis la deuxième carte et la première carte ont la même épaisseur h2+h3 avec ici h3=0.43 et h2=0.50. Les dites troisième carte 4 et deuxième carte 3 et première carte 2 présentent au moins une surface arrivant dans un même plan que la surface recto (Sr) ou verso (Sv) dudit support, à savoir ici leurs faces verso Sv. Les distances maximales entre deux dites deuxièmes parois internes longitudinales opposées 3c,3c' et respectivement deux dites premières parois internes transversale opposées 3d,3d' de la deuxième cavité sont ajustées ou légèrement inférieures (de 0,01 à 0,1 mm), aux distances maximales entre deux dites troisièmes parois externes longitudinales 4a-4a' opposées et respectivement entre deux troisièmes parois externes transversales opposées 4b-4b' du bord extérieur de la dite troisième carte 4, en dehors des dits deuxièmes crochets décrits ci-après.

De façon connue les forme rectangulaires desdites première carte, première cavité, deuxième carte, deuxième cavité et troisième carte comportent chacune dans un des angles arrondis de leur contour rectangulaire, une forme tronquée en biseau servant de détrompeur pour permettre un positionnement correct du module de microcircuit. On comprend que l'emplacement des dites deuxième cavité sans fond ou troisième cavité sans fond permet que plages de contact du microcircuit de la carte 3FF ou 4 FF de format réduit coïncide avec l'emplacement normalisé des plages de contact du microcircuit d'une mini-carte au format 2FF standard.

On comprend que, en dehors des dits deuxièmes crochets , les distances maximales entre deux dites deuxièmes parois internes longitudinales opposées 3c,3c' et respectivement entre deux dites deuxièmes parois internes transversale opposées 3d,3d' de la deuxième cavité sont ajustées ou légèrement inférieures aux distances maximales entre deux dites troisièmes parois externes longitudinales 4a-4a' opposées et respectivement entre deux troisièmes parois externes transversales opposées 4b-4b' du bord extérieur de la dite troisième carte 4.

Dans les différents modes de réalisation particuliers, les dites deuxièmes parois internes 3c-3c',3d-3d' de la deuxième cavité et troisièmes parois externes (4a-4a',4b-4b') de la troisième carte définissent une combinaison de:
(i) des deuxièmes éléments de calage constitués par :
   (i-1) une troisième forme interne 3c1-3c2-3c3 de chacune des dites deuxièmes parois internes longitudinales 3c,3c' ou respectivement transversales 3d,3d' de la deuxième cavité, en section dans un plan perpendiculaire à la dite direction transversale (YY') ou respectivement longitudinale (XX') de la dite deuxième carte, s'étendant sur sensiblement toute la longueur d'au moins une des deux dites deuxièmes parois internes et au moins aux extrémités de l'autre dite deuxième paroi interne, définissant une forme en creux du côté de la face recto Sr2 de la deuxième carte dont le fond forme une troisième marche interne 3c1 plate, et
   (i-2) une troisième forme externe 4a1-4a2-4a3 de chacune des deux dites troisièmes parois externes longitudinales 4a,4a' ou respectivement transversales 4b,4b' de la troisième carte, en section dans un plan perpendiculaire à la dite direction transversale (YY') ou respectivement longitudinale (XX') de ladite troisième carte 4, de forme complémentaire et s'étendant sur la même longueur que ladite troisième forme interne, définissant une forme en creux du côté de la face verso Sv3 de la troisième carte dont le fond forme une troisième marche externe 4a1 plate apte à buter contre ladite troisième marche interne, la dite troisième forme externe étant ainsi apte à s'emboiter dans la dite troisième forme interne et la troisième carte se caler dans la dite deuxième cavité, sous l'effet d'une poussée contre la face recto Sr3 de la troisième carte vers la face recto Sr2 de la deuxième carte jusque dans la deuxième cavité, et
-(ii) des deuxièmes crochets constitués par :
   (ii-1) une quatrième forme interne 3d1-3d2-3d3 de chacune des deux dites deuxièmes parois internes transversale 3d,3d' ou respectivement longitudinale 3c,3c', en section dans un plan perpendiculaire aux plans à la dite direction transversale (YY') ou respectivement longitudinale (XX') de la dite deuxième carte, s'étendant sur tout ou partie de la longueur des dites deuxièmes parois internes transversale 3d,3d' ou respectivement longitudinale 3c,3c', en saillie par rapport au reste de dites deuxièmes parois internes les comprenant et d'une longueur plus petite que les dits deuxièmes éléments de calage, de préférence sur une partie sensiblement médiane des dites deuxièmes parois internes , définissant une forme en creux du côté de la face verso Sv2 de la deuxième carte dont le fond forme une quatrième marche interne 3d1 plate, et
   (ii-2) une quatrième forme externe 4b1-4b2-4b3 de chacune des deux dites troisièmes parois externes longitudinales 4a,4a' ou respectivement transversales 4b,4b', en section dans un plan perpendiculaire à la dite direction transversale (YY') ou respectivement longitudinale (XX') de ladite troisième carte , de forme complémentaire en retrait par rapport au reste des dites troisièmes parois externes les comprenant et s'étendant sur la même longueur que ladite quatrième forme interne, ladite quatrième forme externe définissant une forme en creux du côté de la face recto Sr3 de la troisième carte dont le fond forme une quatrième marche externe 4b1 plate apte à buter contre ladite quatrième marche externe 4b1, la dite quatrième forme externe étant ainsi apte à s'emboiter dans la quatrième forme interne et la troisième carte apte à être retenue dans la dite deuxième cavité, sous l'effet d'une poussée contre la face verso Sv3 de la troisième carte une fois la dite troisième carte calée par les dits deuxièmes éléments de calage dans ladite deuxième cavité.

Les dits deuxièmes éléments de calage sont aptes à retenir en butée la troisième carte (4) dans la deuxième cavité (3-1) lorsque la troisième carte subit une poussée depuis sur face recto(Sr3), et les dits des deuxièmes crochets aptes à retenir la troisième carte dans la deuxième cavité lorsque la troisième carte subie une poussée inverse depuis sa face verso (Sv3).

On comprend que lesdites deuxièmes et troisièmes parois comprenant des dites troisièmes formes interne et externe étant aptes à fléchir et de préférence une partie 4b3 côté face verso de ladite quatrième forme externe est apte à glisser contre une partie 3d2 face recto de la dite quatrième forme interne, lors de l'insertion de la dite troisième carte dans la dite deuxième cavité par la face recto de la deuxième carte, par poussée sur la face recto de la dite troisième carte.

Les dits deuxièmes crochets forment des éléments de calage inverse par rapport auxdits deuxièmes éléments de calage en cas de poussée sur la face verso de la troisième carte après emboitement de la troisième carte dans la deuxième cavité et calage par les dits deuxièmes éléments de calage. Mais , du fait de la longueur réduite des deuxièmes crochets par rapport aux deuxièmes éléments de calage, les deuxièmes crochets autorisent néanmoins l'insertion et le retrait de la troisième carte par la face recto de la deuxième carte par poussée contre la face recto de la troisième carte pour l'insertion de la troisième carte et par poussée sur face verso de la troisième carte pour le retrait de la troisième carte, si la poussée est suffisante pour créer une flexion des parois supportant les dits deuxièmes éléments de calage.

On comprend que les faces libres des troisièmes marches interne et externe sont tournées vers la face recto de la deuxième carte et respectivement vers la face verso de la troisième carte, et les faces libres des quatrièmes marches interne et externe sont tournées vers la face verso de la deuxième carte et respectivement vers la face recto de la troisième carte.

Plus particulièrement, les dites deuxièmes parois internes 3c-3c',3d-3d' de la deuxième cavité et troisièmes parois externes 4a-4a',4b-4b' de la troisième carte définissent une combinaison de:
(i) des deuxièmes éléments de calage constitués par :
   (i-1) la dite troisième forme interne définissant une dite troisième marche interne plate 3c1 de chacune des deux dites deuxièmes parois internes longitudinales 3c,3c' ou respectivement transversales 3d,3d', s'étendant entre et parallèlement aux deux surfaces opposées Sr2,Sv2 de ladite deuxième carte 3, et s'étendant sur sensiblement toute la longueur d'au moins une des deux dites deuxièmes parois internes et au moins aux extrémités de l'autre dite deuxième paroi interne, disposée entre une troisième contre marche interne plate verso 3c3 s'étendant du côté de la dite troisième marche interne le plus proche du centre C3 de la dite deuxième cavité jusqu'à la surface verso Sv2 de la dite deuxième carte, et une troisième contre marche interne plate recto 3c2 s'étendant du côté de la dite troisième marche interne le plus éloigné du centre C3 de la dite deuxième cavité jusqu'à la surface recto Sr2 de la dite deuxième carte, et
   (i-2) la dite troisième forme externe définissant une troisième marche externe 4a1 plate de chacune des deux dites troisièmes parois externes longitudinales ou respectivement transversales, disposée entre une troisième contre marche externe plate verso 4a3 s'étendant du côté de la dite première troisième marche externe 4a1 le plus proche du centre C4 de la dite troisième carte jusqu'à la surface verso Sv3 de la dite troisième carte, et une troisième contre marche externe plate recto 4a2 s'étendant du côté de la dite troisième marche externe le plus éloigné du centre C4 de la dite deuxième cavité jusqu'à la surface recto Sr3 de la dite troisième carte, les dites troisièmes contre marches externes recto et respectivement verso 4a2,4a3 étant disposées en vis-à-vis et/ou en butée contre les dites troisièmes contre marches internes recto et respectivement verso 3c2,3c3, les dites troisièmes marches externes 4a1, les dites troisièmes marches internes 3c1 s'étendent sur sensiblement à une même distance h2 et h3 des surfaces opposées Sr et respectivement Sv dudit support que les dites troisièmes marches internes 3c1, après ledit emboitement, et
-(ii) des deuxièmes crochets constitués par :
   (ii-1) la dite quatrième forme interne en saillie définissant une dite quatrième marche interne 3d1 plate de chacune des deux dites deuxièmes parois internes transversale 3d,3d' ou respectivement longitudinale 3c,3c', s'étendant entre et parallèlement aux deux surfaces opposées Sr, Sv de ladite deuxième carte, s'étendant sur une partie seulement de la longueur des dites deuxièmes parois internes, de préférence sur une partie sensiblement médiane, disposée entre une dite quatrième contre marche interne plate verso 3d3 s'étendant du côté de la dite quatrième marche interne le plus éloigné du centre C3 de la dite deuxième cavité jusqu'à la surface verso Sv2 de la dite deuxième carte, de préférence en s'éloignant dudit centre C3 de la deuxième cavité, et une quatrième contre marche interne plate recto 3d2 s'étendant du côté de la dite quatrième marche interne le plus proche du centre C3 de la dite deuxième cavité jusqu'à la surface recto Sr2 de la dite deuxième carte en s'éloignant dudit centre C3 de la dite deuxième cavité, et
   (ii-2) la dite quatrième forme externe en retrait définissant une dite quatrième marche externe 4b1 plate de chacune des deux dites troisièmes parois externes transversales 4b,4b' ou respectivement longitudinales 4a,4a', disposée entre une quatrième contre marche externe plate verso 4b3 s'étendant du côté de la dite quatrième marche externe le plus proche du centre C4 de la dite troisième carte jusqu'à la surface verso Sv3 de la dite troisième carte en se rapprochant dudit centre de la troisième carte , et une quatrième contre marche externe plate recto 4b2 s'étendant du côté de la dite quatrième marche externe le plus éloigné du centre C4 de la dite troisième carte jusqu'à la surface recto Sr3 de la dite troisième carte, les dites quatrièmes contre marches externes recto et respectivement verso 4b2,4b3 étant disposées en vis-à-vis des dites quatrièmes contre marches internes recto et respectivement verso 3d2,3d3, la dite troisième marche externe 4a1 s'étendant sensiblement à une même distance h2 et h3 des surfaces opposées Sr et respectivement Sv dudit support que la dite quatrième marche interne 3d1 après ledit emboitement, et les dite quatrième contre marche interne recto 3d2 et dite quatrième contre marche externe verso 3d3 étant inclinées parallèlement d'un même angle α' de 20 à 60° par rapport à la verticale de manière à autoriser le glissement en butée de la dite quatrième contre marche externe verso 4b3 contre ladite quatrième contre marche interne recto 3d2 puis la flexion desdites deuxièmes parois internes et troisièmes parois externes comprenant des dites troisièmes formes interne et respectivement externe lors de l'insertion de la dite troisième carte dans la dite deuxième cavité par poussée contre la face recto Sr3 de la dite troisième carte, avant un dit emboitement.

On comprend que :
- les deux troisièmes contre marches interne et externes recto et verso s'étendent sur toute la longueur et de part et d'autre de la largeur (d3=0.3 à 0.5 mm) de la dite troisième marche interne et respectivement externe,
- les dites troisièmes marches et contre marches externes recto et verso sont de formes complémentaires et dimensions sensiblement identiques auxdites troisième marches et respectivement contre marches internes, aptes à buter les unes contre les autres et s'emboiter après positionnement de la dite troisième carte dans ladite deuxième cavité , chaque dite troisième marche externe 4a1 reposant contre et étant retenue par une dite troisième marche interne 3c1 sous l'effet d'une poussée de la troisième carte dans la deuxième cavité depuis sa face recto vers sa face verso,
- les dites troisièmes contre marches externes recto et respectivement verso 4a2, 4a3 s'étendant sur la même longueur que, et de préférence parallèlement à, les dites troisièmes marches internes 3c1 et respectivement dites troisièmes contre marches internes recto et respectivement verso 3c2,3c3 et les dites la dite troisième marche externes s'étendent sur sensiblement la même largeur (d3+e, e étant inférieur à 1/5 de d3, notamment e=0.01 à 0.1 mm) que les dites troisièmes marches internes 3c1,
- les deux quatrièmes contre marches internes et externes recto et verso s'étendent sur toute la longueur et de part et d'autre de la largeur (d4=0.3 à 0.5 mm) de la dite quatrième marche interne et respectivement externe,
- les dites quatrièmes marches et contre marches externes recto et verso sont de formes complémentaires et dimensions sensiblement identiques auxdites quatrième marche interne et respectivement dites quatrièmes contre marches internes aptes à buter les unes contre les autres et s'emboiter après positionnement de la dite troisième carte dans ladite deuxième cavité , chaque dite quatrième marche externe 4b1 reposant contre et étant retenue par une dite quatrième marche interne 3c1 sous l'effet d'une poussée contre la face verso Sv3 de la troisième carte dans la deuxième cavité une fois la dite troisième carte calée contre les dits deuxièmes éléments de calage dans ladite deuxième cavité
- la dite troisième marche externe 4a1 s'étend parallèlement à et sur la même longueur et sensiblement même largeur (d4+e e étant inférieur à 1/5 de d4, notamment e=0.01 à 0.1 mm) que la dite quatrième marche interne 3d1 et au même niveau en hauteur après ledit emboitement,

Plus particulièrement encore, dans cette deuxième variante de réalisation, lesdits deuxièmes éléments de calages et deuxièmes crochets comprennent:
- desdites troisièmes contremarches externes recto 4a2 et verso 4a3 s'étendant perpendiculairement à ladite troisième marche externe 4a1, la dite troisième contre marche interne verso 3c3 étant disposée perpendiculairement ou d'un angle β1' inférieure à 90° , de préférence de 85 à 90°, par rapport à la dite première marche interne 3c1, et la dite troisième contre marche interne recto 3c2 est inclinée d'un angle β2' supérieur à 90°, de préférence de 92 à 98°, par rapport à la dite troisième marche interne 3c1, et
- une dite quatrième contre marche interne verso 3d3 s'étendant perpendiculairement ou d'un angle β3' supérieur à 90°, de préférence de 92 à 98°, par rapport à ladite quatrième marche interne 3d1, ladite quatrième contre marche externe recto 4b2 s'étendant perpendiculairement ou d'un angle β4' supérieur à 90°, de préférence de 92 à 98°, par rapport à ladite quatrième marche externe 4b1.

Plus particulièrement, et de préférence, dans le mode de réalisation des figures 8 à 15, le dit support comprend:
- (a) desdits premiers éléments de calage comprenant des dites premières marches internes 2a1 de chacune des deux dites premières parois longitudinales 2a,2a' et des dites premières marches externes 3a1 de deux dites deuxièmes parois externes longitudinales 3a,3a', les dites premières marches internes 2a1 et deuxièmes marches externes 3a1 s'étendant continument parallèlement à la surface du dit support sur sensiblement toute la longueur de l'une des deux dites premières parois longitudinales 2a,2a' et respectivement deuxièmes parois externes longitudinales 3a,3a', et aux extrémités seulement de l'autre dite première paroi longitudinale 2a,2a' et respectivement deuxième paroi externe longitudinale 3a,3a', et de préférence des premières marches internes 2b1 à une extrémité seulement des dites première paroi transversales 2b,2b' et respectivement des premières marches externes 3b1 à une extrémité seulement des dites deuxièmes parois externes transversales 3ba,3b', et
- (b) des dits premiers crochets 2b1'-2b2'-2b3', 3b1'-3b2'-3b3' s'étendant dans ladite direction transversale (YY') sensiblement sur une partie centrale de la longueur des dites premières parois transversales 2b, 2b' et respectivement deuxièmes parois externes transversales 3b, 3b', et
- (i) des deuxièmes éléments de calage comprenant des dites troisièmes marches internes 3c1 de chacune des dites deuxièmes parois internes longitudinales 3c,3c' et des dites troisième marche externe (4a1) de chacune des deux dites troisièmes parois externes longitudinales 4a,4a', les dites troisièmes marches internes (3c1) et externes (4a1) s'étendant continument parallèlement à la surface du dit support sur sensiblement toute la longueur des deux dites deuxièmes parois internes longitudinales et respectivement dites troisièmes parois externes longitudinales, et
- (ii) des deuxièmes crochets 3d1-3d2-3d3, 4b1-4b2-4b3 s'étendant dans ladite direction transversale (YY') sensiblement sur une partie centrale de la longueur des dites deuxièmes parois internes transversale 3d, 3d' et respectivement troisièmes parois externes transversales 4b, 4b'.

Sur les figures 11A-11B et 12A-12B, les dites troisièmes marches internes 3c1 et externes 4a1 s'étendant continument parallèlement à la surface du dit support sur toute la longueur d'une des deux dites deuxièmes parois internes longitudinales et respectivement dites troisièmes parois externes longitudinales et avec une interruption centrale 3c" au milieu de 3c1 sur le côté 3c' destinée à recevoir un élément en sailli 4c", lequel comprend un orifice d'injection de matière pour le procédé de moulage. Dans ce mode de réalisation, la deuxième cavité ouverte est délimitée sur un côté par une poutre longitudinale relativement étroite laquelle ne pourrait pas recevoir sur sa face verso des dits deuxième formes externe creuses de dits premiers crochets sauf à fragiliser de manière excessive la dite poutre creuses, tandis qu'en revanche elle supporte sans la fragiliser de manière excessive des dites premières marches internes et deuxièmes marches externes s'étendant aux extrémités seulement de la dite deuxième paroi externe longitudinale 3a,3a' délimitant la dite poutre.

Ce mode de réalisation ci-dessus est particulièrement avantageux du fait que la deuxième cavité 3-1 n'étant pas centrée sur la surface de la deuxième carte 3, elle est délimitée par deux poutres longitudinales latérales 3-2,3-3 dont la plus étroite 3-2 de largeur D=0,35 mm ne supporterait pas un creusement de matière en son sein pour former *sur* sa face verso des dits deuxième formes externe creuses de dits premiers crochets voire des premiers éléments de calage sur toute la longueur de la poutre sauf à affecter sa résistance mécanique de manière excessive. Dans ce cas, il est suffisant que lesdites premiers éléments de calage s'étendent aux extrémités seulement de ladite deuxième paroi externe longitudinale 3a située sur la poutre la plus étroite 3-2 située du côté opposé à une forme standard en biseau 3d3 d'un angle de la deuxième cavité destiné à coopérer avec une forme complémentaire d'un angle en biseau 4d1 de la troisième carte.

Pour compenser la longueur limitée des premiers éléments de calages 3a1 du côté de la première paroi longitudinale 3a de la poutre 3-2, on réalise des éléments de calage complémentaires comprenant en outre des premières marches internes 2b1 à une extrémité du côté de la poutre 3-2 de chacune des deux premières parois transversales 2b,2b' de la première cavité et des premières marches externes 3b1 à une extrémité du côté de la poutre 3-2 de chacune des deuxièmes parois transversales 3b,3b' du bord extérieur de deuxième carte 3 comme décrit figure 10A et 11B. Ils forment avec les éléments de calage 2a1 et 3a1, des éléments de calage en angle 2-2 par ajout de matière aux deux extrémités longitudinales de la paroi 2a de la première cavité et éléments de calage complémentaires en angle 3-4 (par creusement de matière) aux deux extrémités longitudinales de la paroi externe 3a de la poutre étroite 3-2 de la deuxième carte 3.

Entre les deux éléments de calage 2a1 aux deux extrémités longitudinales de la première paroi longitudinale 2a, la forme de la paroi 2a présente une forme convexe à angle obtus en section perpendiculaire à Sri, Sv1 et XX' pouvant réaliser des éléments de serrage par coopération avec une forme concave des parois 3a en vis-à-vis entre les deux éléments de calage 3a1 aux deux extrémités longitudinales de la première paroi longitudinale 3a, la paroi 3a présentant une forme concave complémentaire à même angle obtus en section perpendiculaire à Sr, SV et XX'.

Dans le mode de réalisation à 3 cartes des figures 8 à 15, les dites première, deuxième, troisième et quatrième marches internes et des dites première, deuxième, troisième et quatrième marches externes s'étendent sensiblement à une même distance h2 de la face recto dudit support et de préférence au moins des dites premières et deuxièmes cartes, h2 étant différente de, de préférence supérieure à, leur même distance h3 par rapport la face verso dudit support et de préférence des dites première, deuxième et troisième cartes.

Ce mode de réalisation est particulièrement avantageux pour faciliter la réalisation desdites deuxième cartes par moulage par injection dans lequel deux parties mobiles et parties fixes de moule font ainsi de niveau d'un même et unique plan de jonction correspondant au dit même plan des dites marches.

Ainsi on peut réaliser un procédé de fabrication d'un support selon les figures 8 à 15 dans lequel les dites première carte, deuxième carte et troisième carte et elles sont réalisées par moulage par injection chacune séparément, la deuxième carte 3 étant réalisée à l'aide de deux parties de moule , de préférence une partie mobile 10 et une partie fixe 11, avec un plan de joint (12) coïncidant en outre au moins avec les dites troisièmes et quatrièmes marches internes et externes des deuxièmes éléments de calage et les dits deuxièmes crochets..

Sur les figures 8 à 15, plus particulièrement, lesdits deuxièmes crochets s'étendent en partie centrale des deux opposées transversales 3d, 3d' s'étendant sur au moins 10%, de préférence de 30 à 50% de la longueur des dites deuxièmes parois internes et dites troisièmes parois externes de préférence transversales.

Sur les figures 15A-15D, on a représenté la cinématique d'insertion d'une deuxième carte 3 dans la première cavité de la première carte, ladite deuxième carte incorporant une troisième carte dans sa deuxième cavité, déjà mise en place après mise en oeuvre desdits deuxièmes éléments de calage et dits deuxièmes crochets. Pour la mise en oeuvre desdits deuxièmes éléments de calage et deuxièmes crochets, la troisième carte 4 et lesdits deuxièmes éléments de calage et dits deuxièmes crochets subissent les mêmes déplacements et mêmes déformations en flexion que celles décrites en liaison avec le descriptif des figures 7A-7D ci-dessus pour la deuxième carte et lesdits premiers éléments de calage et dits premiers crochets.

Dans le mode de réalisation à 3 cartes des figures 8 à 15, pour compenser la faible rigidité de la poutre étroite 3-2, lesdits deuxièmes éléments de calage sont complétés par des troisièmes éléments de renfort et de calage comprenant :
- (j-1) des cinquièmes marches et contre marches 3e constituant un apport de matière latéralement à une dite quatrième partie plate interne 3c2 du côté de ladite deuxième cavité, comprenant des cinquièmes parties plates disposées parallèlement à, dessous et à côté des dites deuxièmes parties plates intermédiaires internes 3c1, au moins aux deux extrémités longitudinales d'au moins la dite deuxième paroi interne longitudinale 3c bordant la poutre la plus étroite 3-2 encadrant la dite deuxième cavité 3-1, de préférence des dites cinquièmes parties plates 3e en angle à contour arrondi 3e1 du côté du la dite deuxième cavité 3-1 s'étendant aux deux extrémités longitudinales de la dite deuxième paroi interne longitudinale 3c bordant la poutre la plus étroite 3-2 et à une extrémité de chacune des deux dite deuxième paroi transversales interne 3d,3d' du côté de la poutre la plus étroite 3-2, et
- (j-2) des formes creuses complémentaires 4c en sous face de la dite troisième carte 4 formant des sixièmes marches et contre marches de formes complémentaires auxdites cinquièmes marches et contre marches aptes à s'emboiter et buter les unes contre les autres.

Dans le mode de réalisation à 3 cartes des figures 8 à 15, pour compenser la faible rigidité de la poutre étroite 3-2, lesdits deuxièmes éléments de calage sont complétés par des quatrièmes éléments de calage additionnels comprenant :
- (jj-1) des septièmes marches et contre marches 3f constituant un apport de matière latéralement à une dite cinquième partie plate interne 3c3 du côté de ladite deuxième cavité, comprenant des sixièmes parties plates 3f disposées parallèlement à et par-dessus les dites deuxièmes parties plates intermédiaires internes longitudinales 3c1, formant des septièmes marches et contre marches au moins aux deux extrémités longitudinales d'au moins la dite deuxième parois interne 3c bordant la poutre la plus fine 3-2 encadrant la dite deuxième cavité 3-1, et
- (jj-2) des formes creuses complémentaires 4d en sous face de la dite troisième carte 4 formant des huitièmes marches et contre marches de formes complémentaires auxdites septièmes marches et contre marches aptes à s'emboiter buter les unes contre les autres.

Les dimensions standards de la première carte 2FF 2 sont de 25mm x 15 mm. Les dimensions standards de la première cavité 2-1 sont de 15,02m x 11,97 mm. Les dimensions standards de la deuxième carte 3FF 3 avant positionnement dans la première cavité sont celles de la première cavité +2e1 dans la longueur et dans la largeur. Les dimensions standards de la deuxième cavité 3-1 sont de 15m x12 mm.

Figures 3B, 4B 13B et 14B, on prévoit une distance e= 0.01 à 0.1 mm selon les règles de conception mécanique, cette différence de cote entre les marches internes et marches externes concernées en appui les unes contre les autres permettant de rattraper les imprécisions de cote entre les marches et assurer que l'une au moins des contre marches internes et externes recto ou verso en vis-à-vis au moins soient en butée l'une contre l'autre après emboitement. Il s'agit donc d'une distance de jeu nécessaire pour réaliser un assemblage de pièces métalliques compte tenu des possibles défauts de cote.

Sur la figure 4B et 14B , une des extrémité des contre marches inclinées des dits premiers et deuxièmes crochets se prolongent par une section droite perpendiculaire à la surface de la carte concernée de h=0,05mm pour des raisons de règles de conception mécanique et contrainte des modes de mise en forme des pièces en acier lors du moulage par injection.

Avantageusement, comme montré figure 14B, les parties de dites parois internes ou parois externes des premières , deuxième ou troisième cartes ou de première ou deuxième cavité ne comportant pas de dits premiers ou seconds élément de calage ou crochet présentent une forme angulaire convexe selon un angle obtus α1, en section dans un plan perpendiculaire aux plans des deux surfaces opposées de ladite carte concernée et à la dite direction longitudinale XX' ou respectivement transversale YY', la dite forme convexe étant formée par deux parties plates inclinées 3a4 et 3a5 réunies au niveau d'un premier bord longitudinal de chacune d'elles formant un sommet S de la dite forme convexe de dit angle obtus s'étendant entre et parallèlement aux deux surfaces opposées de ladite carte, les deuxièmes bords des deux dites parties plates inclinées étant disposés aux niveaux ou à proximité de 2 surfaces opposées respectivement de la dite carte. Le dit angle obtus α1 est un angle de 150 à 175°, de préférence de 165°, les deux dites parties plates inclinées étant inclinées d'un angle identique ou différent α2, α3 de 2 à 15°, de préférence de 5 à 10°, (notamment 10° pour α2 et 5° pour α3), par rapport au dit plan de section perpendiculaire aux plans des surface de la dite carte Sr,Sv. Le dit sommet S des dits angles obtus α1 des dites formes convexe formées par lesdites parties plates inclinées arrivent sensiblement à la même hauteur h2, h3 que les dites premières et deuxièmes marches internes et externes par rapport à une même surface recto ou verso du dit support.

De préférence, les deux dites parties plates inclinées formant un dit angle obtus convexe présentent des inclinaisons α2 et α3 différentes par rapport au dit plan de section perpendiculaire aux plans des surfaces de dite carte, celle de plus grande inclinaison α2, de préférence de 8 à 12°, de préférence encore 10°, s'étendant sur la plus petite hauteur h2 depuis une des faces de ladite carte , celle de plus petite inclinaison α3, de préférence de 3 à 7°, de préférence encore 5°, s'étendant sur la plus grande hauteur h3 depuis l'autre face de ladite carte.

Cet angle obtus non symétrique avec des angles α2 et α3 différents est optimal pour permettre en outre à la fois- une facilité de démoulage après injection (angle de dépouille de plus petite valeur du côté de la partie de moule comportant le plus de matière , et aussi permettre néanmoins une introduction aisée de la deuxième carte dans la première cavité réalisant un serrage de bonne tenue avec un cliquetage sonore lorsque les deux formes angulaires complémentaires sont correctement emboitées l'une contre l'autre du fait de l'angle de valeur plus élevée de l'autre partie inclinée .

Les forces de retrait ou dépositionnement de la deuxième carte 3 et de la troisième carte 4 sont de 5 à 15 N chacune, et notamment de 12 N pour la deuxième carte 3, alors que dans les réalisations antérieures, cette force de dépositionnement des plus petites cartes ne dépassait pas 3 N.

## Revendications

1. Support (1) de cartes comprenant au moins une première carte (2) de format réduit, ladite première carte étant solidaire dudit support détachable mécaniquement, de préférence au moyen d'une prédécoupe ou pré-entaille de contour détachable mécaniquement de manière irréversible par rapport au dit support, ladite première carte comprenant une première cavité (2-1) sans fond, dans laquelle est adapté une deuxième carte (3) de plus petit format que ladite première carte, la dite deuxième carte (3) comportant une deuxième cavité (5-1,3-1), les parois (2a-2a',2b-2b') de ladite première cavité et les parois (3a-3a',3b-3b') de ladite deuxième carte (3) définissant une combinaison de :
- (a) premiers éléments de calage constitués par :
(1a) une première forme interne (2a1-2a2-2a3,2b1-2b2-2b3) de chacune de deux premières parois longitudinales (2a,2a') ou transversales (2b,2b') de la première cavité (2-1) en section dans un plan perpendiculaire à la dite direction transversale (YY') ou respectivement longitudinale (XX') de la dite première carte, s'étendant sur sensiblement toute la longueur d'au moins une des deux dites premières parois et au moins aux extrémités de l'autre dite première paroi, définissant une forme en creux du côté de la face recto (Sri) de la première carte (2) dont le fond forme une première marche interne (2a1, 2b1), et
(2a) une première forme externe (3a1-3a2-3a3,3b1-3b2-3b3) de chacune des deux deuxièmes parois externes longitudinales (3a,3a') ou respectivement transversales (3b,3b') de la deuxième carte (3) en section dans un plan perpendiculaire à la dite direction transversale (YY') ou respectivement longitudinale (XX') de ladite deuxième carte (3), de forme complémentaire, définissant une forme en creux du côté de la face verso (Sv2) de la deuxième carte (3) dont le fond forme une première marche externe (3a1, 3b1), apte à buter contre ladite première marche interne (2a1, 2b1) la dite première forme externe étant ainsi apte à s'emboiter dans la dite première forme interne et la deuxième carte (3) étant apte à se caler dans la dite première cavité (2-1), sous l'effet d'une poussée contre la face recto (Sr2) de la deuxième carte vers la face recto (Sr1) de la première carte jusque dans la première cavité, et
- (b) des premiers crochets constitués par :
(1b) une deuxième forme interne (2a'1-2a'2-2a'3, 2b'1-2b'2-2b'3) de chacune des deux dites premières parois transversale (2b,2b') ou respectivement longitudinale (2a,2a'), en section dans un plan perpendiculaire à la dite direction transversale (YY') ou respectivement longitudinale (XX') de la dite première carte, s'étendant sur une partie seulement de la longueur des dites premières parois, en saillie par rapport au reste de dites premières parois internes les comprenant et d'une longueur plus petite que les dits premiers éléments de calage, la dite deuxième forme interne définissant une forme en creux du côté de la face verso (Sv1) de la première carte dont le fond forme une deuxième marche interne (2a'1, 2b'1), et
(2b) une deuxième forme externe (3a'1-3a'2-3a'3, 3b'1 -3b'2-3b'3) de chacune des deux dites deuxièmes parois externes longitudinales (3a,3a') ou respectivement transversales (3b,3b'), en section dans un plan perpendiculaire à la dite direction transversale (YY') ou respectivement longitudinale (XX') de ladite deuxième carte, de forme en retrait par rapport au reste de dites deuxièmes parois externes les comprenant et s'étendant sur la même longueur que ladite deuxième forme interne, ladite deuxième forme externe définissant une forme en creux du côté de la face recto (Sr2) de la deuxième carte dont le fond forme une deuxième marche externe (3a'1,3b'1), apte à buter contre ladite deuxième marche interne (2a'1, 2b'1), la dite deuxième forme externe étant ainsi apte à s'emboiter dans la dite deuxième forme interne et la deuxième carte étant apte à être retenue dans la dite première cavité, sous l'effet d'une poussée contre la face verso (Sv2) de la deuxième carte une fois la dite deuxième carte calée dans ladite première cavité par les dits premiers éléments de calage,
**caractérisé en ce que** lesdits premiers crochets comprennent une partie inclinée (3a'3) côté face verso (Sr₂) de ladite deuxième forme externe de ladite deuxième carte (3) apte à glisser contre une partie inclinée (2a'2) face recto (Sr1) de ladite deuxième forme interne de ladite première cavité de la première carte (2), lors de l'insertion de la deuxième carte dans ladite première cavité par poussée contre la face recto (Sr2) de ladite deuxième carte.

2. Support selon la revendication 1 **caractérisé en ce que** les dites premières parois (2a-2a',2b-2b') et deuxième parois externes (3a-3a',3b-3b') définissent une combinaison :
(a) de dits premiers éléments de calage constitués par :
(1a) la dite première forme interne définissant une dite première marche interne plate (2a1,2b1) de chacune des deux dites premières parois longitudinales (2a,2a') ou respectivement transversales (2b,2b'), s'étendant entre et parallèlement aux deux surfaces opposées (Sr1,Sv1) de ladite première carte (2), sur sensiblement toute la longueur d'au moins une des deux dites premières parois longitudinales ou respectivement transversales et au moins aux extrémités de l'autre dite première paroi longitudinale ou respectivement transversale, disposée entre une première contre marche interne plate verso (2a3,2b3) s'étendant du côté de la dite première marche interne le plus proche du centre (C1) de la dite première cavité jusqu'à la surface verso (Sv1) de la dite première carte, et une première contre marche interne plate recto (2a2,2b2) s'étendant du côté de la dite première marche interne le plus éloigné du centre (C1) de la dite première cavité jusqu'à sa surface recto (Sr1), et
(2a) la dite première forme externe définissant une dite première marche externe plate (3a1,3b1) de chacune des deux dites deuxièmes parois externes longitudinales ou respectivement transversales, disposée entre une première contre marche externe plate verso (3a3 ,3b3) s'étendant du côté de la dite première marche externe (3a1,3b1) le plus proche du centre (C2) de la dite deuxième carte jusqu'à la surface verso (Sv2) de la dite deuxième carte, et une première contre marche externe plate recto (3a2,3b2) s'étendant du côté de la dite première marche externe le plus éloigné du centre (C2) de la dite deuxième carte jusqu'à sa surface recto (Sr2), les dites premières contre marches externes recto et verso (3a2-3b2,3a3-3b3) étant disposées en vis-à-vis des et/ou en butée contre les dites premières contre marches internes recto et respectivement verso (2a2-2b2,2a3-2b3), les dites premières marches externes (3a1,3b1) s'étendant sensiblement à une même distance (h2,h3) des surfaces opposées (Sr,Sv) dudit support que les dites premières marches internes (2a1,2b1), après ledit emboitement, et
-(b) des dits premiers crochets constitués par :
(1b) la dite deuxième forme interne en saillie définissant une dite deuxième marche interne plate (2a1',2b1') de chacune des deux dites premières parois transversale (2b,2b') ou respectivement longitudinale (2a,2a'), s'étendant entre et parallèlement aux deux surfaces opposées (Sr1,Sv1) de ladite première carte, sur une partie seulement de la longueur des dites premières parois, de préférence sur une partie sensiblement médiane, disposée entre une deuxième contre marche interne plate verso (2a3',2b3') s'étendant du côté de la dite deuxième marche interne le plus proche du centre (C1) de la dite première cavité jusqu'à la surface verso (Sv1) de la dite première carte de préférence en s'éloignant dudit centre, et une deuxième contre marche interne plate recto (2a2',2b2') s'étendant du côté de la dite deuxième marche interne le plus éloigné du centre (C1) de la dite première cavité jusqu'à la surface recto (Sr1) de la dite première carte en s'éloignant dudit centre de la première cavité, et
(2b) la dite deuxième forme externe en retrait définissant une dite deuxième marche externe plate (3a1',3b1') de chacune des deux dites deuxièmes parois externes longitudinales ou respectivement transversales, disposée entre une deuxième contre marche externe plate verso (3a3',3b3') s'étendant du côté de la dite deuxième marche externe le plus proche du centre de la dite deuxième carte jusqu'à sa surface verso (Sv2) en se rapprochant dudit centre (C2) de la deuxième carte , et une deuxième contre marche externe plate recto (3a2',3b2') s'étendant du côté de la dite deuxième marche externe le plus éloigné du centre (C2) de la dite deuxième carte jusqu'à sa surface recto (Sr2), les dites deuxièmes contre marches externes recto et respectivement verso (3a2'-3b2',3a3'-3b3') étant disposées en vis-à-vis des dites deuxièmes contre marches internes recto et respectivement verso (2a2'-2b2',2a3'-2b3'), la dite deuxième marche externe (3a1',3b1') s'étendant sensiblement à une même distance (h2,h3) des surfaces opposées (Sr, Sv) dudit support que la dite deuxième marche interne (2a1',2b1') après ledit emboitement, et les dite deuxième contre marche interne recto (2a2') et dite deuxième contre marche externe verso (3a3') étant inclinées parallèlement d'un même angle α de 20 à 60° par rapport à la verticale, de manière à autoriser le glissement en butée de la dite deuxième contre marche externe verso (3a3') contre ladite deuxième contre marche interne recto (2a2') puis la flexion desdites premières et deuxièmes parois comprenant des dites premières formes interne et externe, lors de l'insertion de la dite deuxième carte dans la dite première cavité par poussée contre la face recto (Sr2) de la dite deuxième carte, avant un dit emboitement.

3. Support selon la revendication 2 **caractérisé en ce que** :
- lesdites premières contremarches externes recto et verso (3a2-3b2,3a3-3b3) s'étendent perpendiculairement à ladite première marche externe (3a1,3b1), la dite première contre marche interne verso (2a3,2b3) est disposée perpendiculairement ou d'un angle β1 inférieure à 90°, de préférence de 85 à 90°, par rapport à la dite première marche interne (2a1,2b1),et la dite première contre marche interne recto (2a2, 2b2) est inclinée d'un angle β2 supérieur à 90°, de préférence de 92 à 98°, par rapport à la dite première marche interne (2a1,2b1), et
- ladite deuxième contre marche interne verso (2a'3,2b'3) s'étend perpendiculairement ou d'un angle β3 supérieur à 90°, de préférence de 92 à 98°, par rapport à ladite deuxième marche interne (2a1', 2b1'), et ladite deuxième contre marche externe recto (3a2',3b2') s'étend perpendiculairement ou d'un angle β4 supérieur à 90°, de préférence de 92 à 98°, par rapport à ladite deuxième marche externe (3a1', 3b1').

4. Support selon l'une des revendications 1 à 3 **caractérisé en ce que** les dites première et deuxième marches internes (2a1-2b1, 2a2-2b2) et des dites première et deuxième marches externes (3a1-3b1, 3a2- 3b2) s'étendent sensiblement à une même distance h2 de la face recto des dites premières et deuxièmes cartes différente de, de préférence supérieure à, leur même distance h3 par rapport la face verso des dites première carte et respectivement deuxième carte, et
- des dits premiers crochets (2a1'-2a2', 3a1'-3a2') s'étendent sur au moins 10%, de préférence de 20 à 60%, en partie centrale de la longueur des dites premières parois et deuxièmes parois externes.

5. Support selon l'une des revendications 1 à 4 **caractérisé en ce que** la dite deuxième carte (3) comporte une deuxième cavité avec fond (5-1) comprenant ou apte à recevoir un dit module de microcircuit de carte à puce.

6. Support selon la revendication 5 **caractérisé en ce qu'**il comprend:
(a) desdits premiers éléments de calage comprenant une dite première marche interne (2b1) et dite première marche externe (3b1) s'étendant continument parallèlement à la surface du dit support sur sensiblement toute la longueur des deux dites premières parois transversales (2b, 2b') et respectivement deuxièmes parois externes transversales (3b, 3b'), et
-(b) des dits premiers crochets (2a1'-2a2', 3a1'-3a2') s'étendant dans ladite direction longitudinale (XX') sur au moins 20%, de préférence de 30 à 50%, en partie centrale de la longueur des dites premières parois longitudinales et deuxièmes parois externes longitudinales.

7. Support. selon l'une des revendications 1 à 4 **caractérisé en ce que** la dite deuxième carte (3) comporte une deuxième cavité sans fond (3-1) de forme sensiblement rectangulaire, dans laquelle est adapté une troisième carte (4) de plus petit format que la deuxième carte, la dite troisième carte (4) comportant une troisième cavité avec fond (5-2) comprenant ou apte à recevoir un dit module de microcircuit de carte à puce, la dite deuxième cavité ouverte (3-1) étant délimitée par des deuxièmes parois internes longitudinales (3c-3c') et deuxièmes parois internes transversales (3d-3d') de la dite deuxième cavité (3-1) de forme sensiblement complémentaire à la forme de troisièmes parois externes longitudinales (4a-4a') et respectivement troisièmes parois externes transversales(4b-4b') du bord extérieur de la dite troisième carte (4), les dites troisième carte (4), deuxième carte (3) et deuxième cavité (3-1) présentant une même direction longitudinale (XX') dans leur longueur et même direction transversale (YY') dans leur largeur, les dites troisième et deuxième cartes présentant au moins une surface recto (Sr2, Sr3) ou verso (Sv2, Sv3) arrivant dans un même plan que la surface recto (Sr) ou verso (Sv) dudit support.

8. Support selon la revendication 7 **caractérisé en ce que** les dites deuxièmes parois internes (3c-3c',3d-3d') de la deuxième cavité et troisièmes parois externes (4a-4a',4b-4b') de la troisième carte définissent une combinaison de:
(i) des deuxièmes éléments de calage constitués par :
(i-1) une troisième forme interne (3c1-3c2-3c3) de chacune des dites deuxièmes parois internes longitudinales (3c,3c') ou respectivement transversales (3d,3d') de la deuxième cavité, en section dans un plan perpendiculaire à la dite direction transversale (YY') ou respectivement longitudinale (XX') de la dite deuxième carte, s'étendant sur sensiblement toute la longueur d'au moins une des deux dites deuxièmes parois internes et au moins aux extrémités de l'autre dite deuxième paroi interne, définissant une forme en creux du côté de la face recto (Sr2) de la deuxième carte dont le fond forme une troisième marche interne (3c1) plate, et
(i-2) une troisième forme externe (4a1-4a2-4a3) de chacune des deux dites troisièmes parois externes longitudinales (4a,4a') ou respectivement transversales (4b,4b') de la troisième carte, en section dans un plan perpendiculaire à la dite direction transversale (YY') ou respectivement longitudinale (XX') de ladite troisième carte (4), de forme complémentaire et s'étendant sur la même longueur que ladite troisième forme interne, définissant une forme en creux du côté de la face verso (Sv3) de la troisième carte dont le fond forme une troisième marche externe (4a1) plate apte à buter contre ladite troisième marche interne, la dite troisième forme externe étant ainsi apte à s'emboiter dans la dite troisième forme interne et la troisième carte se caler dans la dite deuxième cavité, sous l'effet d'une poussée contre la face recto (Sr3) de la troisième carte vers la face recto (Sr2) de la deuxième carte jusque dans la deuxième cavité, et
-(ii) des deuxièmes crochets constitués par :
(ii-1) une quatrième forme interne (3d1-3d2-3d3) de chacune des deux dites deuxièmes parois internes transversale (3d,3d') ou respectivement longitudinale (3c,3c'), en section dans un plan perpendiculaire à la dite direction transversale (YY') ou respectivement longitudinale (XX') de la dite deuxième carte, s'étendant sur tout ou partie de la longueur des dites deuxièmes parois internes transversale (3d,3d') ou respectivement longitudinale (3c,3c'), en saillie par rapport au reste de dites deuxièmes parois internes les comprenant et d'une longueur plus petite que les dits deuxièmes éléments de calage, de préférence sur une partie sensiblement médiane des dites deuxièmes parois internes , définissant une forme en creux du côté de la face verso (Sv2) de la deuxième carte dont le fond forme une quatrième marche interne (3d1) plate, et
(ii-2) une quatrième forme externe (4b1-4b2-4b3) de chacune des deux dites troisièmes parois externes longitudinales (4a,4a') ou respectivement transversales (4b,4b'), en section dans un plan perpendiculaire aux plans à la dite direction transversale (YY') ou respectivement longitudinale (XX') de ladite troisième carte, de forme complémentaire en retrait par rapport au reste des dites troisièmes parois externes les comprenant et s'étendant sur la même longueur que ladite quatrième forme interne, ladite quatrième forme externe définissant une forme en creux du côté de la face recto (Sr3) de la troisième carte dont le fond forme une quatrième marche externe (4b1) plate apte à buter contre ladite quatrième marche externe (4b1), la dite quatrième forme externe étant ainsi apte à s'emboiter dans la quatrième forme interne et la troisième carte apte à être retenue dans la dite deuxième cavité, sous l'effet d'une poussée contre la face verso (Sv3) de la troisième carte une fois la dite troisième carte calée par les dits deuxièmes éléments de calage dans ladite deuxième cavité.

9. Support selon la revendication 8 **caractérisé en ce que** les dites deuxièmes parois internes (3c-3c',3d-3d') de la deuxième cavité et troisièmes parois externes (4a-4a',4b-4b') de la troisième carte définissent une combinaison de:
(i) des deuxièmes éléments de calage constitués par :
(i-1) la dite troisième forme interne définissant une dite troisième marche interne (3c1) plate de chacune des deux dites deuxièmes parois internes longitudinales (3c,3c') ou respectivement transversales (3d,3d'), s'étendant entre et parallèlement aux deux surfaces opposées (Sr2,Sv2) de ladite deuxième carte (3), et s'étendant sur sensiblement toute la longueur d'au moins une des deux dites deuxièmes parois internes et au moins aux extrémités de l'autre dite deuxième paroi interne, disposée entre une troisième contre marche interne plate verso (3c3) s'étendant du côté de la dite troisième marche interne le plus proche du centre (C3) de la dite deuxième cavité jusqu'à la surface verso (Sv2) de la dite deuxième carte, et une troisième contre marche interne plate recto (3c2) s'étendant du côté de la dite troisième marche interne le plus éloigné du centre (C3) de la dite deuxième cavité jusqu'à la surface recto (Sr2) de la dite deuxième carte, et
(i-2) la dite troisième forme externe définissant une troisième marche externe (4a1) plate de chacune des deux dites troisièmes parois externes longitudinales ou respectivement transversales, disposée entre une troisième contre marche externe plate verso (4a3) s'étendant du côté de la dite première troisième marche externe (4a1) le plus proche du centre (C4) de la dite troisième carte jusqu'à la surface verso (Sv3) de la dite troisième carte, et une troisième contre marche externe plate recto (4a2) s'étendant du côté de la dite troisième marche externe le plus éloigné du centre (C4) de la dite deuxième cavité jusqu'à la surface recto (Sr3) de la dite troisième carte, les dites troisièmes contre marches externes recto et respectivement verso (4a2,4a3) étant disposées en vis-à-vis et/ou en butée contre les dites troisièmes contre marches internes recto et respectivement verso (3c2,3c3), les dites troisièmes marches externes (4a1), les dites troisièmes marches internes (3c1) s'étendent sur sensiblement à une même distance (h2,h3) des surfaces opposées (Sr, Sv) dudit support que les dites troisièmes marches internes (3c1), après ledit emboitement, et
-(ii) des deuxièmes crochets constitués par :
(ii-1) la dite quatrième forme interne en saillie définissant une dite quatrième marche interne (3d1) plate de chacune des deux dites deuxièmes parois internes transversale (3d,3d') ou respectivement longitudinale (3c,3c'), s'étendant entre et parallèlement aux deux surfaces opposées (Sr, Sv) de ladite deuxième carte, s'étendant sur une partie seulement de la longueur des dites deuxièmes parois internes, de préférence sur une partie sensiblement médiane, disposée entre une dite quatrième contre marche interne plate verso (3d3) s'étendant du côté de la dite quatrième marche interne le plus éloigné du centre (C3) de la dite deuxième cavité jusqu'à la surface verso (Sv2) de la dite deuxième carte, de préférence en s'éloignant dudit centre(C3) de la deuxième cavité, et une quatrième contre marche interne plate recto (3d2) s'étendant du côté de la dite quatrième marche interne le plus proche du centre (C3) de la dite deuxième cavité jusqu'à la surface recto (Sr2) de la dite deuxième carte en s'éloignant dudit centre (C3) de la dite deuxième cavité, et
(ii-2) la dite quatrième forme externe en retrait définissant une dite quatrième marche externe (4b1) plate de chacune des deux dites troisièmes parois externes transversales (4b,4b') ou respectivement longitudinales (4a,4a'), disposée entre une quatrième contre marche externe plate verso (4b3) s'étendant du côté de la dite quatrième marche externe le plus proche du centre (C4) de la dite troisième carte jusqu'à la surface verso (Sv3) de la dite troisième carte en se rapprochant dudit centre de la troisième carte , et une quatrième contre marche externe plate recto (4b2) s'étendant du côté de la dite quatrième marche externe le plus éloigné du centre(C4) de la dite troisième carte jusqu'à la surface recto (Sr3) de la dite troisième carte, les dites quatrièmes contre marches externes recto et respectivement verso (4b2,4b3) étant disposées en vis-à-vis des dites quatrièmes contre marches internes recto et respectivement verso (3d2,3d3), la dite troisième marche externe (4a1) s'étendant sensiblement à une même distance (h2,h3) des surfaces opposées (Sr, Sv) dudit support que la dite quatrième marche interne (3d1) après ledit emboitement, et les dite quatrième contre marche interne recto (3d2) et dite quatrième contre marche externe verso (3d3) étant inclinées parallèlement d'un même angle α' de 20 à 60° par rapport à la verticale de manière à autoriser le glissement en butée de la dite quatrième contre marche externe verso (4b3) contre ladite quatrième contre marche interne recto (3d2) puis la flexion desdites deuxièmes parois internes et troisièmes parois externes comprenant des dites troisièmes formes interne et respectivement externe lors de l'insertion de la dite troisième carte dans la dite deuxième cavité par poussée contre la face recto (Sr3) de la dite troisième carte, avant un dit emboitement.

10. Support selon la revendication 8 ou 9 **caractérisé en ce que** :
- lesdites troisièmes contremarches externes recto et verso (4a2,4a3) s'étendent perpendiculairement à ladite troisième marche externe (4a1), la dite troisième contre marche interne verso (3c3) est disposée perpendiculairement ou d'un angle β1' inférieure à 90° , de préférence de 85 à 90°, par rapport à la dite première marche interne (3c1), et la dite troisième contre marche interne recto (3c2) est inclinée d'un angle β2' supérieur à 90°, de préférence de 92 à 98°, par rapport à la dite troisième marche interne (3c1), et
- ladite quatrième contre marche interne verso (3d3) s'étend perpendiculairement ou d'un angle β3' supérieur à 90°, de préférence de 92 à 98°, par rapport à ladite quatrième marche interne (3d1), et ladite quatrième contre marche externe recto (4b2) s'étend perpendiculairement ou d'un angle β4' supérieur à 90°, de préférence de 92 à 98°, par rapport à ladite quatrième marche externe (4b1).

11. Support selon l'une des revendications 7 à 10 **caractérisé en ce qu'**il comprend:
- (a) desdits premiers éléments de calage comprenant des dites premières marches internes (2a1) de chacune des deux dites premières parois longitudinales (2a,2a') et des dites premières marches externes (3a1) de deux dites deuxièmes parois externes longitudinales (3a,3a'), les dites premières marches internes (2a1) et deuxièmes marches externes (3a1) s'étendant continument parallèlement à la surface du dit support sur sensiblement toute la longueur de l'une des deux dites premières parois longitudinales (2a,2a') et respectivement deuxièmes parois externes longitudinales (3a,3a'), et aux extrémités seulement de l'autre dite première paroi longitudinale (2a,2a') et respectivement deuxième paroi externe longitudinale (3a,3a'), et de préférence des premières marches internes (2b1) à une extrémité seulement des dites première paroi transversales (2b,2b') et respectivement des premières marches externes (3b1) à une extrémité seulement des dites deuxièmes parois externes transversales (3ba,3b'), et
- (b) des dits premiers crochets (2b1'-2b2'-2b3', 3b1'-3b2'-3b3) s'étendant dans ladite direction transversale (YY') sensiblement sur une partie centrale de la longueur des dites premières parois transversales (2b, 2b') et respectivement deuxièmes parois externes transversales (3b, 3b'), et
- (i) des deuxièmes éléments de calage comprenant des dites troisièmes marches internes (3c1) de chacune des dites deuxièmes parois internes longitudinales (3c,3c') et des dites troisième marche externe (4a1) de chacune des deux dites troisièmes parois externes longitudinales (4a,4a'), les dites troisièmes marches internes (3c1) et externes (4a1) s'étendant continument parallèlement à la surface du dit support sur sensiblement toute la longueur des deux dites deuxièmes parois internes longitudinales et respectivement dites troisièmes parois externes longitudinales, et
- (ii) des deuxièmes crochets (3d1-3d2-3d3, 4b1-4b2-4b3) s'étendant dans ladite direction transversale (YY') sensiblement sur une partie centrale de la longueur des dites deuxièmes parois internes transversale (3d, 3d') et respectivement troisièmes parois externes transversales (4b,4b').

12. Support selon l'une des revendications 8 à 11 **caractérisé en ce que** les dites première, deuxième, troisième et quatrième marches internes et des dites première, deuxième, troisième et quatrième marches externes s'étendent sensiblement à une même distance h2 de la face recto dudit support et de préférence au moins des dites premières et deuxièmes cartes, h2 étant différente de, de préférence supérieure à, leur même distance h3 par rapport la face verso dudit support et de préférence des dites première, deuxième et troisième cartes, et lesdits deuxièmes crochets s'étendent en partie centrale des deux opposées transversales (3d, 3d') s'étendant sur au moins 10%, de préférence de 30 à 50% de la longueur des dites deuxièmes parois internes et dites troisièmes parois externes de préférence transversales.

13. Support selon l'une des revendications 8 à 12 **caractérisé en ce que** lesdits deuxièmes éléments de calage sont complétés par des troisièmes éléments de renfort et de calage comprenant :
- (j-1) des cinquièmes marches et contre marches (3e) constituant un apport de matière latéralement à une dite quatrième contre marche interne verso (3c2) du côté de ladite deuxième cavité, comprenant des cinquièmes marches disposées parallèlement à, dessous et à côté des dites quatrième marches internes (3c1), au moins aux deux extrémités longitudinales d'au moins la dite deuxième paroi interne longitudinale (3c) bordant la poutre la plus étroite (3-2) encadrant la dite deuxième cavité (3-1), de préférence des dites cinquièmes marches et contre marches (3e) en angle à contour arrondi (3e1) du côté du la dite deuxième cavité (3-1) s'étendant aux deux extrémités longitudinales de la dite deuxième paroi interne longitudinale (3c) bordant la dite poutre la plus étroite (3-2) et à une extrémité de chacune des deux dite deuxième paroi transversales interne (3d,3d') du côté de la poutre la plus étroite (3-2), et
- (j-2) des formes creuses complémentaires (4c) en sous face de la dite troisième carte formant des sixièmes marches et contre marches de formes complémentaires auxdites cinquièmes marches et contre marches aptes à s'emboiter et buter les unes contre les autres, et
- de préférence, lesdits deuxièmes éléments de calage sont complétés par des quatrièmes éléments de calage additionnels comprenant :
(jj-1) des septièmes marches et contre marches (3f) constituant un apport de matière sur une dite quatrième marche interne (3c1) du côté de ladite deuxième cavité, comprenant des septièmes marches (3f) disposées parallèlement à et par-dessus les dites quatrième marche internes longitudinales (3c1), formant des septièmes marches et contre marches au moins aux deux extrémités longitudinales d'au moins la dite deuxième parois interne (3c) bordant la poutre la plus fine (3-2) encadrant la dite deuxième cavité (3-1), et
- (jj-2) des formes creuses complémentaires (4d) en sous face de la dite troisième carte formant des huitièmes marches et contre marches de formes complémentaires auxdites septièmes marches et contre marches aptes à s'emboiter buter les unes contre les autres.

14. Procédé de fabrication d'un support selon l'une des revendications 1 à 13 **caractérisé en ce que** les dites première carte, deuxième carte sont réalisées par moulage par injection chacune séparément à l'aide de deux parties de moule , de préférence une partie mobile (10) et une partie fixe (11), avec un plan de joint (12) coïncidant au moins avec les dites premières et deuxièmes marches internes (2a1, 2b1) et externes (3a1, 3b1) des premiers éléments de calage et dits premiers crochets.

15. Procédé de fabrication d'un support selon la revendication 14 caractérisé en ce qui! comprend des dites première carte, deuxième carte et troisième carte et elles sont réalisées par moulage par injection chacune séparément, la deuxième carte (3) étant réalisée à l'aide de deux parties de moule, de préférence une partie mobile (10) et une partie fixe (11), avec un plan de joint (12) coïncidant en outre au moins avec les dites troisièmes et quatrièmes marches internes et externes des deuxièmes éléments de calage et les dits deuxièmes crochets.

## Patentansprüche

1. Kartenträger (1), umfassend mindestens eine erste Karte (2) mit verkleinertem Format, wobei die erste Karte mit dem Träger mechanisch lösbar verbunden ist, vorzugsweise mittels einer Vorstanzung oder einem Voreinschnitt des Umrisses, die oder der in irreversibler Weise gegenüber dem Träger mechanisch lösbar ist, wobei die erste Karte einen ersten Hohlraum (2-1) ohne Boden aufweist, in den eine zweite Karte (3) mit kleinerem Format als die ersten Karte eingepasst ist, wobei die zweite Karte (3) einen zweiten Hohlraum (5-1, 3-1) aufweist, wobei die Wände (2a-2a', 2b-2b') des ersten Hohlraums und die Wände (3a-3a', 3b-3b') der zweiten Karte (3) eine Kombination definieren aus:
- (a) ersten Verkeilungselementen, die gebildet werden von:
(1a) einer ersten inneren Form (2a1-2a2-2a3, 2b1-2b2-2b3) von jeder der zwei ersten Längswände (2a, 2a') oder Querwände (2b, 2b') des ersten Hohlraums (2-1) im Querschnitt in einer Ebene, die senkrecht zu der Querrichtung (YY') oder jeweils Längsrichtung (XX') der ersten Karte ist, die sich über im Wesentlichen die gesamte Länge von mindestens einer der zwei ersten Wände und mindestens an den Enden der anderen ersten Wand erstreckt, die eine Hohlform auf der Seite der Vorderseite (Sr1) der ersten Karte (2) bildet, deren Boden eine erste innere Stufe (2a1, 2b1) bildet, und
(2a) einer ersten äußeren Form (3a1-3a2-3a3, 3b1-3b2-3b3) von jeder der zwei zweiten äußeren Längswände (3a, 3a') oder jeweils Querwände (3b, 3b') der zweiten Karte (3) im Querschnitt in einer Ebene, die senkrecht zu der Querrichtung (YY') oder jeweils der Längsrichtung (XX') der zweiten Karte (3) von komplementärer Form ist, die eine Hohlform auf der Seite der Rückseite (Sv2) der zweiten Karte (3) bildet, deren Boden eine erste äußere Stufe (3a1, 3b1) bildet, die geeignet ist, gegen die erste innere Stufe (2a1, 2b1) anzuliegen, wobei die erste äußere Form auf diese Weise geeignet ist, in die erste innere Form eingefügt zu werden und wobei die zweite Karte (3) geeignet ist, in den ersten Hohlraum (2-1) unter der Einwirkung eines Drückens gegen die Vorderseite (Sr2) der zweiten Karte (3) in Richtung der Vorderseite (Sr1) der ersten Karte bis in den ersten Hohlraum verkeilt zu werden, und
- (b) ersten Haken, die gebildet werden von:
(1b) einer zweiten inneren Form (2a'1-2a'2 -2a'3, 2b'1-2b'2 -2b'3) von jeder der zwei ersten Quer- (2b, 2b') oder jeweils Längswände (2a, 2a') im Querschnitt in einer Ebene, die senkrecht zu der Querrichtung (YY') oder jeweils der Längsrichtung (XX') der ersten Karte ist, die sich nur über einen Teil der Länge der ersten Wände erstreckt, die gegenüber dem Rest der ersten inneren Wände sie umfassend und um eine kürzere Länge als die ersten Verkeilungselemente vorsteht, wobei die zweite innere Form eine Hohlform auf der Seite der Rückseite (Sv1) der ersten Karte bildet, deren Boden eine zweite innere Stufe (2a'1, 2b'1) bildet, und
(2b) einer zweiten äußeren Form (3a'1-3a'2 -3a'3 ,3b'1-3b'2 -3b'3) von jeder der zwei zweiten äußeren Längswände (3a, 3a') oder jeweils Querwände (3b, 3b') im Querschnitt in einer Ebene, die senkrecht zu der Querrichtung (YY') oder jeweils der Längsrichtung (XX') der zweiten Karte ist, von einer Form, die gegenüber dem Rest der zwei äußeren Wände sie umfassend zurücksteht und sich über die gleiche Länge wie die zweite innere Form erstreckt, wobei die zweite äußere Form eine Hohlform auf der Seite der Vorderseite (Sr2) der zweiten Karte bildet, deren Boden eine zweite äußere Stufe (3a'1, 3b'1) bildet, die geeignet ist, gegen die zweite innere Stufe (2a'1, 2b'1) anzuliegen, wobei die zweite äußere Form auf diese Weise geeignet ist, in die zweite innere Form eingefügt zu werden und die zweite Karte geeignet ist, in dem ersten Hohlraum unter der Einwirkung eines Drückens gegen die Rückseite (Sv2) der zweiten Karte gehalten zu werden, wenn die zweite Karte in dem ersten Hohlraum durch die ersten Verkeilungselemente verkeilt ist,
**dadurch gekennzeichnet, dass** die ersten Haken einen geneigten Abschnitt (3a'3) auf der Seite der Rückseite (Sv2) der zweiten äußeren Form der zweiten Karte (3) aufweisen, der geeignet ist, an einem geneigten Abschnitt (2a'2) der Vorderseite (Sr1) der zweiten inneren Form des ersten Hohlraums der ersten Karte (2) bei dem Einfügen der zweiten Karte in den ersten Hohlraum durch Drücken gegen die Vorderseite (Sr2) der zweiten Karte zu gleiten.

2. Träger nach Anspruch 1, **dadurch gekennzeichnet, dass** die ersten (2a-2a', 2b-2b') und zweiten äußeren Wände (3a-3a', 3b-3b') eine Kombination definieren aus:
(a) den ersten Verkeilungselementen, die gebildet sind durch:
(1a) die erste innere Form, die eine erste flache innere Stufe (2a1, 2b1) von jeder der zwei ersten Längs- (2a, 2a') oder jeweils Querwände (2b, 2b'), die sich zwischen und parallel zu den zwei gegenüberliegenden Flächen (Sr1, Sv1) der ersten Karte (2) über im Wesentlichen die gesamte Länge von mindestens einer der zwei ersten Längs- oder jeweils Querwände und mindestens an den Enden der anderen ersten Längs- oder jeweils Querwand erstreckt, die zwischen einer ersten rückseitigen, flachen, inneren Gegenstufe (2a3, 2b3) angeordnet ist, die sich von der Seite der ersten inneren Stufe, die der Mitte (C1) des ersten Hohlraums am nächsten liegt, bis zu der Rückseite (Sv1) der ersten Karte erstreckt, und eine erste vorderseitige, flache, innere Gegenstufe (2a2, 2b2) definiert, die sich von der Seite der ersten inneren Stufe, die von der Mitte (C1) des ersten Hohlraums am weitesten entfernt ist, bis zu ihrer Vorderseite (Sr1) erstreckt, und
(2a) die erste äußere Form, die eine erste flache, äußere Stufe (3a1, 3b1) von jeder der zwei zweiten äußeren Längs- oder jeweils Querwände, die zwischen einer ersten rückseitigen, flachen, äußeren Gegenstufe (3a3, 3b3) angeordnet ist, die sich von der Seite der ersten äußeren Stufe (3a1, 3b1), die der Mitte (C2) der zweiten Karte am nächsten liegt, bis zu der Rückseite (Sv2) der zweiten Karte erstreckt, und eine erste vorderseitige, flache, äußere Gegenstufe (3a2, 3b2) definiert, die sich von der Seite der ersten äußeren Stufe, die von der Mitte (C2) der zweiten Karte am weitesten entfernt ist, bis zu ihrer Vorderseite (Sr2) erstreckt, wobei die ersten vorderseitigen und rückseitigen, flachen, äußeren Gegenstufen (3a2-3b2, 3a3-3b3) gegenüber von und/oder anliegend an den ersten vorderseitigen und jeweils rückseitigen, inneren Gegenstufen (2a2-2b2, 2a3-2b3) angeordnet sind, wobei sich die ersten äußeren Stufen (3a1,3b1) im Wesentlichen in einem gleichen Abstand (h2, h3) von den gegenüberliegenden Flächen (Sr, Sv) des Trägers erstrecken, wie die ersten inneren Stufen (2a1, 2b1) nach dem Einfügen, und
- (b) erste Haken, die gebildet sind durch:
(1a) die zweite vorspringende innere Form, die eine zweite flache, innere Stufe (2a1', 2b1') von jeder der zwei ersten Quer- (2b, 2b') oder jeweils Längswände (2a, 2a'), die sich zwischen und parallel zu den zwei gegenüberliegenden Flächen (Sr1, Sv1) der ersten Karte nur über einen Abschnitt der Länge der ersten Wände, vorzugsweise über einen im Wesentlichen mittleren Abschnitt erstreckt, die zwischen einer zweiten rückseitigen, flachen, inneren Gegenstufe (2a3', 2b3') angeordnet ist, die sich von der Seite der zweiten inneren Stufe, die der Mitte (C1) des ersten Hohlraums am nächsten liegt, bis zu der Rückseite (Sv1) der ersten Karte erstreckt, vorzugsweise indem sie sich von der Mitte entfernt, und eine zweite vorderseitige, flache, innere Gegenstufe (2a2', 2b2') definiert, die sich von der Seite der zweiten inneren Stufe, die von der Mitte (C1) des ersten Hohlraums am weitesten entfernt ist, bis zu der Vorderseite (Sr1) der ersten Karte erstreckt, indem sie sich von der Mitte des ersten Hohlraums entfernt, und
(2B) die zweite zurückstehende, äußere Form, die eine zweite flache, äußere Stufe (3a1', 3b1') von jeder der zwei zweiten äußeren Längs- oder jeweils Querwände, die zwischen einer zweiten rückseitigen, flachen, äußeren Gegenstufe (3a3', 3b3') angeordnet ist, die sich von der Seite der zweiten äußeren Stufe, die der Mitte der zweiten Karte am nächsten liegt, bis zu ihrer Rückseite (Sv2) erstreckt, indem sie sich der Mitte (C2) der zweiten Karte nähert, und eine zweite vorderseitige, flache, äußere Gegenstufe (3a2', 3b2') definiert, die sich von der Seite der zweiten äußeren Stufe, die von der Mitte (C2) der zweiten Karte am weitesten entfernt ist, bis zu ihrer Vorderseite (Sr2) erstreckt, wobei die zweiten vorderseitigen und jeweils rückseitigen, äußeren Gegenstufen (3a2'-3b2', 3a3'-3b3') gegenüber von den zweiten vorderseitigen und jeweils rückseitigen, inneren Gegenstufen (2a2'-2b2', 2a3'-2b3') angeordnet sind, wobei sich die zweite äußere Stufe (3a1', 3b1') im Wesentlichen in einem gleichen Abstand (h2, h3) von den gegenüberliegenden Flächen (Sr, Sv) des Trägers erstreckt, wie die zweite innere Stufe (2a1', 2b1') und die zweite vorderseitige innere Gegenstufe (2a2') und die zweite rückseitige äußere Gegenstufe (3a3') parallel um einen gleichen Winkel α von 20 bis 60 ° gegenüber der Vertikalen geneigt sind, um das Gleiten in Anlage an der zweiten rückseitigen äußeren Gegenstufe (3a3') gegen die zweite vorderseitige innere Gegenstufe (2a2') und dann das Biegen der ersten Wände und der zweiten Wände, die die erste innere und die erste äußere Form umfassen, bei dem Einfügen der zweiten Karte in den ersten Hohlraum durch Drücken gegen die Vorderseite (Sr2) der zweiten Karte vor einem Einfügen zu ermöglichen.

3. Träger nach Anspruch 2, **dadurch gekennzeichnet, dass**:
- sich die ersten vorderseitigen und rückseitigen, äußeren Gegenstufen (3a2-3b2, 3a3-3b3) senkrecht zu der ersten äußeren Stufe (3a1, 3b1) erstrecken, wobei die erste rückseitige, innere Gegenstufe (2a3, 2b3) senkrecht oder in einem Winkel β1 von weniger als 90 °, vorzugsweise von 85 bis 90 ° gegenüber der ersten inneren Stufe (2a1, 2b1) angeordnet ist, und die erste vorderseitige, innere Gegenstufe (2a2, 2b2) um einen Winkel β2 von mehr als 90 °, vorzugsweise von 92 bis 98 ° gegenüber der ersten inneren Stufe (2a1, 2b1) geneigt ist, und
- sich die zweite rückseitige, innere Gegenstufe (2a'3, 2b'3) senkrecht oder in einem Winkel β3 von mehr als 90 °, vorzugsweise von 92 bis 98° gegenüber der zweiten inneren Stufe (2a1', 2b1') erstreckt, und sich die zweite vorderseitige, äußere Gegenstufe (3a2', 3b2') senkrecht oder um einen Winkel β4 von mehr als 90 °, vorzugsweise von 92 bis 98 ° gegenüber der zweiten äußeren Stufe (3a1', 3b1') erstreckt.

4. Träger nach einem der Ansprüche 1 bis 3, **dadurch gekennzeichnet, dass** sich die erste und zweite innere Stufe (2a1-2b1, 2a2-2b2) und die erste und zweite äußere Stufe (3a1-3b1, 3a2- 3b2) im Wesentlichen um einen gleichen Abstand h2 von der Vorderseite der ersten und der zweiten Karte erstrecken, der sich von ihrem gleichen Abstand h3 unterscheidet, vorzugsweise größer als ihr gleicher Abstand h3 gegenüber der Rückseite der ersten und jeweils zweiten Karte ist, und
- sich erste Haken (2a1'-2a2', 3a1'-3a2') über mindestens 10 %, vorzugsweise 20 bis 60 % im mittleren Abschnitt der Länge der ersten und zweiten äußeren Wände erstreckt.

5. Träger nach einem der Ansprüche 1 bis 4, **dadurch gekennzeichnet, dass** die zweite Karte (3) einen zweiten Hohlraum mit Boden (5-1) aufweist, der ein Mikroschaltungsmodul für Chipkarten aufweist oder geeignet ist, dieses aufzunehmen.

6. Träger nach Anspruch 5, **dadurch gekennzeichnet, dass** er aufweist:
(a) erste Verkeilungselemente, die eine erste innere Stufe (2b1) und eine erste äußere Stufe (3b1) aufweisen, die sich kontinuierlich parallel zu der Fläche des Trägers über im Wesentlichen die gesamte Länge der zwei ersten Querwände (2b, 2b') und jeweils zweiten äußeren Querwände (3b, 3b') erstrecken, und
- (b) erste Haken (2a1'-2a2', 3a1'-3a2'), die sich in die Längsrichtung (XX') über mindestens 20 %, vorzugsweise 30 bis 50 % im mittleren Abschnitt der Länge der ersten äußeren Längswände und der zweiten äußeren Längswände erstrecken.

7. Träger nach einem der Ansprüche 1 bis 4, **dadurch gekennzeichnet, dass** die zweite Karte (3) einen zweiten Hohlraum ohne Boden (3-1) mit im Wesentlichen rechteckiger Form aufweist, in den eine dritte Karte (4) mit kleinerem Format als die zweite Karte eingepasst ist, wobei die dritte Karte (4) einen dritten Hohlraum mit Boden (5-2) aufweist, der ein Mikroschaltungsmodul für Chipkarten aufweist oder geeignet ist, dieses aufzunehmen, wobei der zweite offene Hohlraum (3-1) durch zweite innere Längswände (3c-3c') und zweite innere Querwände (3d-3d') des zweiten Hohlraums (3-1) von im Wesentlichen komplementärer Form zu der Form der dritten äußeren Längswände (4a-4a') und jeweils dritte äußere Querwände (4b-4b') des Außenrandes der dritten Karte (4) begrenzt ist, wobei die dritte Karte (4), die zweite Karte (3) und der zweite Hohlraum (3-1) eine gleiche Längsrichtung (XX') in ihrer Länge und eine gleiche Querrichtung (YY') in ihrer Breite aufweisen, wobei die dritte und zweite Karte mindestens eine Vorderseite (Sr2, Sr3) oder Rückseite (Sv2, Sv3) aufweisen, die in einer gleichen Ebene wie die Vorderseite (Sr) oder Rückseite (Sv) des Trägers ankommen.

8. Träger nach Anspruch 7, **dadurch gekennzeichnet, dass** die zweiten inneren Wände (3c-3c', 3d-3d') des zweiten Hohlraums und die dritten äußeren Wände (4a-4a', 4b-4b') der dritten Karte eine Kombination definieren aus:
- (i) zweiten Verkeilungselementen, die gebildet sind durch:
(i-1) eine dritte innere Form (3c1-3c2-3c3) von jeder der zweiten inneren Längswände (3c, 3c) oder jeweils Querwände (3d, 3d') des zweiten Hohlraums im Querschnitt in einer Ebene, die senkrecht zu der Querrichtung (YY') oder jeweils der Längsrichtung (XX') der zweiten Karte ist, die sich im Wesentlichen über die gesamte Länge von mindestens einer der zwei zweiten inneren Wände und mindestens an den Enden der anderen zweiten inneren Wand erstreckt, die eine Hohlform auf der Seite der Vorderseite (Sr2) der zweiten Karte bildet, deren Boden eine dritte flache, innere Stufe (3c1) bildet, und
(i-2) eine dritte äußere Form (4a1-4a2-4a3) von jeder der zwei dritten äußeren Längs- (4a, 4a') oder jeweils Querwände (4b, 4b') der dritten Karte im Querschnitt in einer Ebene, die senkrecht zu der Querrichtung (YY') oder jeweils Längsrichtung (XX') der dritten Karte (4) ist, von komplementärer Form und die sich über die gleiche Länge wie die dritte innere Form erstreckt, die eine Hohlform auf der Seite der Rückseite (Sv3) der dritten Karte bildet, deren Boden eine dritte flache, äußere Stufe (4a1) bildet, die geeignet ist, gegen die dritte innere Stufe anzuliegen, wobei die dritte äußere Form auf diese Weise geeignet ist, in die dritte innere Form eingefügt zu werden und die dritte Karte geeignet ist, in dem zweiten Hohlraum unter der Einwirkung eines Drückens gegen die Vorderseite (Sr3) der dritten Karte in Richtung der Vorderseite (Sr2) der zweiten Karte bis in den zweiten Hohlraum verkeilt zu werden, und
- (ii) zweiten Haken, die gebildet sind durch:
(ii-1) eine vierte innere Form (3d1-3d2-3d3) von jeder der zwei zweiten inneren Quer- (3d, 3d') oder jeweils Längswände (3c, 3c') im Querschnitt in einer Ebene, die senkrecht zu der Querrichtung (YY') oder jeweils Längsrichtung (XX') der zweiten Karte ist, die sich über die gesamte oder einen Teil der Länge der zweiten inneren Quer- (3d, 3d') oder jeweils Längswände (3c, 3c') erstreckt, die gegenüber dem Rest der zweiten inneren Wände sie umfassend und um eine kürzere Länge als die zweiten Verkeilungselemente, vorzugsweise über einen im Wesentlichen mittleren Bereich der zweiten inneren Wände vorsteht, die eine Hohlform auf der Seite der Rückseite (Sv2) der zweiten Karte bildet, deren Boden eine vierte flache, innere Stufe (3d1) bildet, und
(ii-2) eine vierte äußere Form (4b1-4b2-4b3) von jeder der zwei dritten äußeren Längs- (4a, 4a') oder jeweils Querwände (4b, 4b') im Querschnitt in einer Ebene, die senkrecht zu der Querrichtung (YY') oder jeweils Längsrichtung (XX') der dritten Karte ist, von komplementärer Form, die gegenüber dem Rest der dritten äußeren Wände sie umfassend zurücksteht und sich über die gleiche Länge wie die vierte innere Form erstreckt, wobei die vierte äußere Form eine Hohlform auf der Seite der Vorderseite (Sr3) der dritten Karte bildet, deren Boden eine vierte flache, äußere Stufe (4b1) bildet, die geeignet ist, gegen die vierte äußere Stufe (4b1) anzuliegen, wobei die vierte äußere Form auf diese Weise geeignet ist, in die vierte innere Form eingefügt zu werden und die dritte Karte geeignet ist, in dem zweiten Hohlraum unter der Einwirkung eines Drückens gegen die Rückseite (Sv3) der dritten Karte gehalten zu werden, wenn die dritte Karte in dem zweiten Hohlraum durch die zweiten Verkeilungselemente verkeilt ist.

9. Träger nach Anspruch 8, **dadurch gekennzeichnet, dass** die zweiten inneren Wände (3c-3c', 3d-3d') des zweiten Hohlraums und die dritten äußeren Wände (4a-4a', 4b-4b') der dritten Karte eine Kombination definieren aus:
(i) zweiten Verkeilungselementen, die gebildet sind durch:
(i-1) die dritte innere Form, die eine dritte flache, innere Stufe (3c1) von jeder der zwei zweiten inneren Längs- (3c, 3c') oder jeweils Querwände (3d, 3d'), die sich zwischen und parallel zu den zwei gegenüberliegenden Flächen (Sr2, Sv2) der zweiten Karte (3) erstrecken, und sich im Wesentlichen über die gesamte Länge von mindestens einer der zwei zweiten inneren Wände und mindestens an den Enden der anderen zweiten inneren Wand erstreckt, die zwischen einer dritten rückseitigen, flachen, inneren Gegenstufe (3c3) angeordnet ist, die sich von der Seite der dritten inneren Stufe, die der Mitte (C3) des zweiten Hohlraums am nächsten liegt, bis zu der Rückseite (Sv2) der zweiten Karte erstreckt, und eine dritte vorderseitige, flache, innere Gegenstufe (3c2) definiert, die sich von der Seite der dritten inneren Stufe, die von der Mitte (C3) des zweiten Hohlraums am weitesten entfernt ist, bis zu der Vorderseite (Sr2) der zweiten Karte erstreckt, und
(i-2) die dritte äußere Form, die eine dritte flache, äußere Stufe (4a1) von jeder der zwei dritten äußeren Längs- oder jeweils Querwände, die zwischen einer dritten rückseitigen, flachen, äußeren Gegenstufe (4a3) angeordnet ist, die sich von der Seite der ersten dritten äußeren Stufe (4a1), die der Mitte (C4) der dritten Karte am nächsten liegt, bis zu der Rückseite (Sv3) der dritten Karte erstreckt, und eine dritte vorderseitige, flache, äußere Gegenstufe (4a2) definiert, die sich von der Seite der dritten äußeren Stufe, die von der Mitte (C4) des zweiten Hohlraums am weitesten entfernt ist, bis zu ihrer Vorderseite (Sr3) der dritten Karte erstreckt, wobei die dritten vorderseitigen und jeweils rückseitigen, flachen, äußeren Gegenstufen (4a2, 4a3) gegenüber von und/oder anliegend an den dritten vorderseitigen und jeweils rückseitigen, inneren Gegenstufen (3c2, 3c3) angeordnet sind, wobei sich die dritten äußeren Stufen (4a1), die dritten inneren Stufen (3c1) im Wesentlichen in einem gleichen Abstand (h2, h3) von den gegenüberliegenden Flächen (Sr, Sv) des Trägers erstrecken, wie die dritten inneren Stufen (3c1) nach dem Einfügen, und
- (ii) zweiten Haken, die gebildet sind durch:
(ii-1) die vierte vorspringende, innere Form, die eine vierte flache, innere Stufe (3d1) von jeder der zwei zweiten inneren Quer- (3d, 3d') oder jeweils Längswände (3c, 3c'), die sich zwischen und parallel zu den zwei gegenüberliegenden Flächen (Sr, Sv) der zweiten Karte erstreckt, die sich nur über einen Abschnitt der Länge der zweiten inneren Wände, vorzugsweise über einen im Wesentlichen mittleren Abschnitt erstreckt, die zwischen einer vierten rückseitigen, flachen, inneren Gegenstufe (3d3) angeordnet ist, die sich von der Seite der vierten inneren Stufe, die von der Mitte (C3) des zweiten Hohlraums am weitesten entfernt ist, bis zu der Rückseite (Sv2) der zweiten Karte erstreckt, vorzugsweise indem sie sich von der Mitte (C3) des zweiten Hohlraums entfernt, und eine vierte vorderseitige, flache, innere Gegenstufe (3d2) definiert, die sich von der Seite der vierten inneren Stufe, die der Mitte (C3) des zweiten Hohlraums am nächsten liegt, bis zu ihrer Vorderseite (Sr2) der zweiten Karte erstreckt, indem sie sich von der Mitte (C3) des zweiten Hohlraums entfernt, und
(ii-2) die vierte zurückstehende, äußere Form, die eine vierte flache, äußere Stufe (4b1) von jeder der zwei dritten äußeren Längs- (4b, 4b') oder jeweils Querwände (4a, 4a'), die zwischen einer vierten rückseitigen, flachen, äußeren Gegenstufe (4b3) angeordnet ist, die sich von der Seite der vierten äußeren Stufe, die der Mitte (C4) der dritten Karte am nächsten liegt, bis zu der Rückseite (Sv3) der dritten Karte erstreckt, indem sie sich der Mitte der dritten Karte nähert, und eine vierte vorderseitige, flache, äußere Gegenstufe (4b2) definiert, die sich von der Seite der vierten äußeren Stufe, die von der Mitte (C4) der dritten Karte am weitesten entfernt ist, bis zu der Vorderseite (Sr3) der dritten Karte erstreckt, wobei die vierten vorderseitigen und jeweils rückseitigen, äußeren Gegenstufen (4b2, 4b3) gegenüber von den vierten vorderseitigen und jeweils rückseitigen, inneren Gegenstufen (3d2, 3d3) angeordnet sind, wobei sich die dritte äußere Stufe (4a1) im Wesentlichen in einem gleichen Abstand (h2, h3) von den gegenüberliegenden Flächen (Sr, Sv) des Trägers wie die vierte innere Stufe (3d1) nach dem Einfügen erstreckt, und wobei die vierte vorderseitige, innere Gegenstufe (3d2) und die vierte rückseitige, äußere Gegenstufe (3d3) parallel um einen gleichen Winkel α' von 20 bis 60 ° gegenüber der Vertikalen geneigt sind, um das Gleiten in Anlage an der vierten rückseitigen, äußeren Gegenstufe (4b3) gegen die vierte vorderseitige, innere Gegenstufe (3d2) und dann das Biegen der zweiten inneren Wände und der dritten äußeren Wände, die die dritte innere und jeweils äußere Form umfassen, bei dem Einfügen der dritten Karte in den zweiten Hohlraum durch Drücken gegen die Vorderseite (Sr3) der dritten Karte vor einem Einfügen zu ermöglichen.

10. Träger nach Anspruch 8 oder 9, **dadurch gekennzeichnet, dass**:
- sich die dritten vorderseitigen und rückseitigen, äußeren Gegenstufen (4a2, 4a3) senkrecht zu der dritten äußeren Stufe (4a1) erstrecken, wobei die dritte rückseitige, innere Gegenstufe (3c3) senkrecht zu oder in einem Winkel β1' von weniger als 90 °, vorzugsweise von 85 bis 90 ° gegenüber der ersten inneren Stufe (3c1) angeordnet ist, und die dritte vorderseitige, innere Gegenstufe (3c2) um einen Winkel β2' von mehr als 90 °, vorzugsweise von 92 bis 98 ° gegenüber der dritten inneren Stufe (3c1) geneigt ist, und
- sich die vierte rückseitige, innere Gegenstufe (3d3) senkrecht zu oder in einem Winkel β3' von mehr als 90 °, vorzugsweise von 92 bis 98° gegenüber der vierten inneren Stufe (3d1) erstreckt, und sich die vierte vorderseitige, äußere Gegenstufe (4b2) senkrecht zu oder in einen Winkel β4' von mehr als 90 °, vorzugsweise von 92 bis 98 ° gegenüber der vierten äußeren Stufe (4b1) erstreckt.

11. Träger nach einem der Ansprüche 7 bis 10, **dadurch gekennzeichnet, dass** er aufweist:
- (a) erste Verkeilungselemente, die erste innere Stufen (2a1) von jeder der zwei ersten Längswände (2a, 2a') und erste äußere Stufen (3a1) von zwei der zweiten äußeren Längswände (3a, 3a') aufweisen, wobei sich die ersten inneren Stufen (2a1) und zweiten äußeren Stufen (3a1) kontinuierlich parallel zu der Fläche des Trägers über im Wesentlichen die gesamte Länge von einer der zwei ersten Längswände (2a, 2a') und jeweils zweiten äußeren Längswände (3a, 3a') und an den Enden nur der anderen ersten Längswand (2a, 2a') und jeweils zweiten äußeren Längswand (3a, 3a') erstrecken, und vorzugsweise erste innere Stufen (2a1) an nur einem Ende der ersten Querwände (2b, 2b') und jeweils erste äußere Stufen (3b1) an nur einem Ende der zweiten äußeren Querwände (3ba, 3b'), und
- (b) erste Verkeilungselemente (2b1'-2b2'-2b3', 3b1'-3b2'-3b3'), die sich in eine Querrichtung (YY') im Wesentlichen über einen mittleren Abschnitt der Länge der ersten Querwände (2b, 2b') und jeweils zweiten äußeren Querwände (3b, 3b') erstrecken, und
- (i) zweite Verkeilungselemente, die dritte innere Stufen (3c1) von jeder der zweiten inneren Längswände (3c, 3c') und dritte äußere Stufen (4a1) von jeder der zwei dritten äußeren Längswände (4a, 4a') aufweisen, wobei sich die dritten inneren (3c1) und äußeren (4a1) Stufen kontinuierlich parallel zu der Fläche des Trägers über im Wesentlichen die gesamte Länge der zweiten inneren Längswände und jeweils dritten äußeren Längswände erstrecken, und
- (ii) zweite Haken (3d1-3d2-3d3, 4b1-4b2-4b3), die sich in die Querrichtung (YY') im Wesentlichen über einen mittleren Abschnitt der Länge der zweiten inneren Querwände (3d, 3d') und jeweils dritten äußeren Querwände (4b, 4b') erstrecken.

12. Träger nach einem der Ansprüche 8 bis 11, **dadurch gekennzeichnet, dass** sich die erste, zweite, dritte und vierte innere Stufe und die erste, zweite, dritte und vierte äußere Stufen im Wesentlichen um einen gleichen Abstand h2 von der Vorderseite des Trägers und vorzugsweise mindestens von den ersten und der zweiten Karte erstrecken, wobei sich h2 von ihrem gleichen Abstand h3 unterscheidet, vorzugsweise größer als ihr gleicher Abstand h3 gegenüber der Rückseite des Trägers und vorzugsweise der ersten, zweiten und dritten Karte ist, und sich die zweiten Haken im mittleren Abschnitt der zwei gegenüberliegenden Querwände (3d-3d') erstrecken, die sich über mindestens 10 %, vorzugsweise 30 bis 50 % der Länge der zweiten inneren Wände und der dritten äußeren, vorzugsweise Querwände erstrecken.

13. Träger nach einem der Ansprüche 8 bis 12, **dadurch gekennzeichnet, dass** die zweiten Verkeilungselemente durch dritte Verstärkungs- und Verkeilungselemente vervollständigt sind, umfassend:
- (j-1) fünfte Stufen und Gegenstufen (3e), die eine Zuführung von Material seitlich von einer vierten rückseitigen, inneren Gegenstufe (3c2) auf der Seite des zweiten Hohlraums bilden, die fünfte Stufen aufweisen, die parallel zu, unterhalb und seitlich von den vierten inneren Stufen (3c1) mindestens an den zwei Längsenden von mindestens der zweiten inneren Längswand (3c), die den schmalsten Träger (3-2) säumt, der den zweiten Hohlraum (3-1) einrahmt, angeordnet sind, wobei sich vorzugsweise die fünften Stufen und Gegenstufen (3e) in einem Winkel mit abgerundeter Kontur (3e1) auf der Seite des zweiten Hohlraums (3-1) an den zwei Längsenden der zweiten inneren Längswand (3c), die den schmalsten Träger (3-2) säumt, und an einem Ende von jeder der zwei zweiten inneren Querwände (3d, 3d') auf der Seite des schmalsten Trägers (3-2) erstrecken, und
- (j-2) komplementäre Hohlformen (4c) von der Unterseite der dritten Karte, die sechste Stufen und Gegenstufen von komplementären Formen zu den fünften Stufen und Gegenstufen bilden, die geeignet sind, eingefügt zu werden und aneinander anzustoßen, und
- wobei die zweiten Verkeilungselemente vorzugsweise durch vierte zusätzliche Verkeilungselemente vervollständigt sind, umfassend:
- (jj-1) siebte Stufen und Gegenstufen (3f), die eine Zuführung von Material auf einer vierten inneren Stufe (3c1) auf der Seite des zweiten Hohlraums bilden, die siebte Stufen (3f) aufweisen, die parallel zu und über den vierten inneren Längsstufen (3c1) angeordnet sind, die siebte Stufen und Gegenstufen an mindestens den zwei Längsenden von mindestens der zweiten inneren Wand (3c) bilden, die den schmalsten Träger (3-2) säumt, der den zweiten Hohlraum (3-1) einrahmt, und
- (jj-2) komplementäre Hohlformen (4d) von der Unterseite der dritten Karte, die achte Stufen und Gegenstufen von komplementären Formen zu den siebten Stufen und Gegenstufen bilden, die geeignet sind, eingefügt zu werden und aneinander anzustoßen.

14. Verfahren zum Herstellen eines Trägers nach einem der Ansprüche 1 bis 13, **dadurch gekennzeichnet, dass** die erste Karte und die zweite Karte jeweils getrennt durch Spritzgießen mit Hilfe von zwei Gießformteilen, vorzugsweise einem beweglichen Teil (10) und einem festen Teil (11), mit einer Trennlinie (12), die mindestens mit den ersten und zweiten inneren (2a1, 2b1) und äußeren (3a1, 3b1) Stufen der ersten Verkeilungselemente und der ersten Haken zusammenfällt, hergestellt werden.

15. Verfahren zum Herstellen eines Trägers nach Anspruch 14, **dadurch gekennzeichnet, dass** er die erste Karte, die zweite Karte und die dritte Karte aufweist und sie jeweils getrennt durch Spritzgießen hergestellt werden, wobei die zweite Karte (3) mit Hilfe von zwei Gießformteilen, vorzugsweise einem beweglichen Teil (10) und einem festen Teil (11), mit einer Trennlinie (12), die zudem mindestens mit den dritten und vierten inneren und äußeren Stufen der zweiten Verkeilungselemente und der zweiten Haken zusammenfällt, hergestellt wird.

## Claims

1. A support (1) for cards comprising at least a first card (2) of small format, said first card being secured to said support in mechanically detachable manner, preferably by means of a pre-cut or score-line of outline that is mechanically detachable in non-reversible manner from said support, said first card including a bottomless first cavity (2-1) in which there is fitted a second card (3) of format smaller than said first card, said second card (3) including a second cavity (5-1, 3-1), the "first" walls (2a-2a', 2b-2b') of said first cavity and the "second" walls (3a-3a', 3b-3b') of said second card (3) defining a combination of:
a) first wedging elements constituted by:
1a) an internal first shape (2a1-2a2-2a3, 2b1-2b2-2b3) for each of two longitudinal or transverse first walls (2a, 2a' or 2b, 2b') of the first cavity (2-1) in section in a plane perpendicular to said transverse direction (YY') or respectively to said longitudinal direction (XX') of said first card, extending over substantially the entire length of at least one of the two said first walls and at least to the ends of the other said first wall, defining a hollow shape beside the recto face (Sr1) of the first card (2), the bottom of which forms an internal first step (2a1, 2b1); and
2a) a complementary external first shape (3a1-3a2-3a3, 3b1 3b2-3b3) for each of the two longitudinal or respectively transverse external second walls (3a, 3a' or 3b, 3b') of the second card (3), in section in a plane perpendicular to said transverse direction (YY') or respectively to said longitudinal direction (XX') of said second card (3), defining a hollow shape beside the verso face (Sv2) of the second card (3), the bottom of which forms an external first step (3a1, 3b1) suitable for coming into abutment against said internal first step (2a1, 2b1), said external first shape thus being suitable for engaging in said internal first shape and the second card (3) being suitable for being wedged in said first cavity (2-1), under the effect of thrust against the recto face (Sr2) of the second card towards the recto face (Sr1) of the first card into the first cavity; and
b) first hooks constituted by:
1b) an internal second shape (2a'1-2a'2-2a'3, 2b'1-2b'2-2b'3) of each of the two said transverse or respectively longitudinal first walls (2b, 2b' or 2a, 2a') in section in a plane perpendicular to said transverse direction (YY') or respectively to said longitudinal direction (XX') of said first card, extending over a fraction only of the length of said first walls, projecting from the remainders of said internal first walls that include them and presenting a length shorter than said first wedging elements, said internal second shape defining a hollow shape beside the verso face (Sv1) of the first card, the bottom of which forms an internal second step (2a'1, 2b'1); and
2b) an external second shape (3a'1-3a'2-3a'3, 3b'1-3b'2-3b'3) of each of the two said longitudinal or respectively transverse external second walls (3a, 3a' or 3b, 3b') in section in a plane perpendicular to said transverse direction (YY') or respectively to said longitudinal direction (XX') of said second card, of shape that is set back from the remainders of said external second walls that include them and extending over the same length as said internal second shape, said external second shape defining a hollow shape beside the recto face (Sr2) of the second card, the bottom of which forms an external second step (3a'1, 3b'1), which hollow shape is suitable for coming into abutment against said internal second step (2a'1, 2b'1), said external second shape thus being suitable for engaging in said internal second shape, and the second card being suitable for being held in said first cavity under the effect of thrust against the verso face (Sv2) of the second card once said second card is wedged in said first cavity by said first wedging elements;
the support being **characterized in that** said first hooks include respective sloping portions (3a'3) beside the verso face (Sv2) of said external second shape of said second card (3) suitable for sliding against respective sloping portions (2a'2) beside the recto face (Sr1) of said internal second shape of said first cavity of the first card (2) while the second card is being inserted in said first cavity by pressing against the recto face (Sr2) of said second card.

2. A support according to claim 1, **characterized in that** said first walls (2a-2a', 2b-2b') and said external second walls (3a-3a', 3b-3b') define a combination:
a) of said first wedging elements constituted by:
1a) said internal first shape defining a flat said internal first step (2a1, 2b1) of each of the two said longitudinal or respectively transverse first walls (2a, 2a' or 2b, 2b') extending between and parallel to the two opposite surfaces (Sr1, Sv1) of said first card (2) over substantially the entire length of at least one of the two said longitudinal or respectively transverse first walls and at least to the ends of the other one of said longitudinal or respectively transverse first walls, arranged between a flat verso internal first riser (2a3, 2b3) extending from beside the said internal first step that is closest to the center (C1) of said first cavity to the verso surface (Sv1) of said first card, and a flat recto internal first riser (2a2, 2b2) extending from beside the said internal first step that is furthest from the center (C1) of said first cavity to its recto surface (Sr1); and
2a) said external first shape defining a flat said external first step (3a1, 3b1) of each of the two said longitudinal or respectively transverse external second walls arranged between a flat verso external first riser (3a3, 3b3) extending from beside the said external first step (3a1, 3b1) that is closest to the center (C2) of said second card to the verso surface (Sv2) of said second card, and a flat recto external first step (3a2, 3b2) extending from beside the said external first step that is furthest from the center (C2) of said second card to its recto surface (Sr2), said recto and verso external first risers (3a2-3b2, 3a3-3b3) being arranged facing and/or in abutment against said recto and respectively verso internal first risers (2a2-2b2, 2a3-2b3), said external first steps (3a1, 3b1) extending, after engagement, substantially at the same distance (h2, h3) from the opposite surfaces (Sr, Sv) of said support as said internal first steps (2a1, 2b1); and
b) said first hooks constituted by:
1b) said projecting internal second shape defining a flat said internal second step (2a1', 2b1') of each of the two said transverse or respectively longitudinal first walls (2b, 2b' or 2a, 2a') extending between and parallel to the two opposite surfaces (Sr1, Sv1) of said first card over a fraction only of the length of said first walls, preferably over a substantially middle fraction, arranged between a flat verso internal second riser (2a3', 2b3') extending from beside the said internal second step that is closest to the center (C1) of said first cavity to the verso surface (Sv1) of said first card, preferably going away from said center, and a flat recto internal second riser (2a2', 2b2') extending from beside the said internal second step that is furthest from the center (C1) of said first cavity to the recto surface (Sr1) of said first card going away from said center of the first cavity; and
2b) said set-back external second shape defining a said flat external second step (3a1', 3b1') for each of the two said longitudinal or respectively transverse external second walls arranged between a flat verso external second riser (3a3', 3b3') extending from beside the said external second step that is closest to the center of said second card to its verso surface (Sv2) going towards said center (C2) of the second card, and a flat recto external second riser (3a2', 3b2') extending from beside the said external second step that is furthest from the center (C2) of said second card to its recto surface (Sr2), said recto and respectively verso external second risers (3a2'-3b2', 3a3'-3b3') being arranged facing said recto and respectively verso internal second risers (2a2'-2b2', 2a3'-2b3'), said external second step (3a1', 3b1') extending, after said engagement, substantially at the same distance (h2, h3) from the opposite surfaces (Sr, Sv) of said support as said internal second step (2a1', 2b1'), and said recto internal second riser (2a2') and said verso external second step (3a3') sloping parallel at the same angle α in the range 20° to 60° relative to the vertical so as to allow said verso external second riser (3a3') to slide in abutment against said recto internal second riser (2a2') followed by bending of said first and second walls including said internal and external first shapes while said second card is being inserted in said first cavity by pressing against the recto face (Sr2) of said second card prior to said engagement.

3. A support according to claim 2, **characterized in that**:
· said recto and verso external first risers (3a2-3b2, 3a3-3b3) extend perpendicularly to said external first step (3a1, 3b1), said verso internal first riser (2a3, 2b3) is arranged perpendicularly relative to said internal first step (2a1, 2b1), or at an angle β1 less than 90°, preferably lying in the range 85° to 90°, and said recto internal first riser (2a2, 2b2) slopes at an angle β2 greater than 90°, preferably lying in the range 92° to 98°, relative to said internal first step (2a1, 2b1); and
· said verso internal second riser (2a'3, 2b'3) extends perpendicularly relative to said internal second step (2a1', 2b1') or at an angle β3 greater than 90°, preferably lying in the range 92° to 98°, and said recto external second riser (3a2', 3b2') extends perpendicularly relative to said external second step (3a1', 3b1') or at an angle β4 greater than 90°, preferably in the range 92° to 98°.

4. A support according to any one of claims 1 to 3, **characterized in that** said internal first and second steps (2a1-2b1, 2a2-2b2) and said external first and second steps (3a1-3b1, 3a2-3b2) extend substantially at the same distance h2 from the recto faces of said first and second cards, which distance is different from and preferably greater than their common distance h3 from the verso faces of said first card and of said second card, respectively; and
· some of said first hooks (2a1'-2a2', 3a1'-3a2') extend over at least 10% and preferably in the range 20% to 60% of the central portion of the length of said first walls and said external second walls.

5. A support according to any one of claims 1 to 4, **characterized in that** said second card (3) includes a second cavity (5-1) with a bottom that includes or is suitable for receiving a said IC microcircuit module.

6. A support according to claim 5, **characterized in that** it includes:
a) some of said first wedging elements comprising a said internal first step (2b1) and a said external first step (3b1) extending continuously parallel to the surface of said support over substantially the entire lengths respectively of the two said transverse first walls (2b, 2b') and transverse external second walls (3b, 3b'); and
b) some of said first hooks (2a1'-2a2', 3a1'-3a2') extending in said longitudinal direction (XX') over at least 20%, and preferably 30% to 50% of the central portion of the length of said longitudinal first walls and longitudinal external second walls.

7. A support according to any one of claims 1 to 4, **characterized in that** said second card (3) includes a bottomless second cavity (3-1) of substantially rectangular shape having fitted therein a third card (4) of format smaller than the second card, said third card (4) including a third cavity (5-2) with a bottom that contains or is suitable for receiving a said IC microcircuit module, said open second cavity (3-1) being defined by longitudinal internal second walls (3c-3c') and transverse internal second walls (3d-3d') of said second cavity (3-1) of shapes substantially complementary to the shapes of longitudinal external third walls (4a-4a') and of transverse external third walls (4b-4b') respectively of the outside edge of said third card (4), said third card (4), said second card (3), and said second cavity (3-1) presenting a common lengthwise longitudinal direction (XX') and a common widthwise transverse direction (YY'), said third and second cards presenting at least one respective recto or verso surface (Sr2, Sr3 or Sv2, Sv3) lying in the same plane as the recto or verso surface (Sr or Sv) of said support.

8. A support according to claim 7, **characterized in that** said internal second walls (3c-3c', 3d-3d') of the second cavity and said external third walls (4a-4a', 4b-4b') of the third card define a combination of:
i) second wedging elements constituted by:
i-1) an internal third shape (3c1-3c2-3c3) of said longitudinal or respectively transverse internal second walls (3c, 3c' or 3d, 3d') of the second cavity, in section in a plane perpendicular to said transverse or respectively longitudinal direction (YY' or XX') of said second card, extending over substantially the entire length of at least one of the two said internal second walls and at least to the ends of the other said internal second wall, defining a hollow shape beside the recto face (Sr2) of the second card, the bottom of which forms a flat internal third step (3c1); and
i-2) a complementary external third shape (4a1-4a2-4a3) of each of said two longitudinal or respectively transverse external third walls (4a, 4a' or 4b, 4b') of the third card, in section in a plane perpendicular to said transverse or respectively longitudinal direction (YY' or XX') of said third card (4), extending over the same length as said internal third shape, defining a hollow shape beside the verso face (Sv3) of the third card, of which the bottom forms a flat external third step (4a1) suitable for coming into abutment against said internal third step, said external third shape thus being suitable for engaging in said internal third shape, and the third card wedging in said second cavity under the effect of thrust against the recto face (Sr3) of the third card towards the recto face (Sr2) of the second card into the second cavity; and
ii) second hooks constituted by:
ii-1) an internal fourth shape (3d1-3d2-3d3) of each of said two transverse or respectively longitudinal internal second walls (3d, 3d' or 3c, 3c'), in section in a plane perpendicular to said transverse or respectively longitudinal direction (YY' or XX') of said second card, extending over all or part of the length of said transverse or respectively longitudinal internal second walls (3d, 3d' or 3c, 3c'), projecting relative to the remainder of said internal second walls including them and of length shorter than said second wedging elements, preferably over a substantially middle portion of said internal second walls, defining a hollow shape beside the verso face (Sv2) of the second card, the bottom of which forms a flat internal fourth step (3d1); and
ii-2) a complementary external fourth shape (4b1-4b2-4b3) of each of said two longitudinal or respectively transverse external third walls (4a, 4a' or 4b, 4b'), in section in a plane perpendicular to the planes of said transverse or respectively longitudinal direction (YY' or XX') of said third card, of shape that is set back from the remainders of said external third walls containing them and extending over the same length as said internal fourth shape, said external fourth shape defining a hollow shape beside the recto face (Sr3) of the third card, the bottom of which forms a flat external fourth step (4b1) suitable for coming into abutment against said internal fourth step (4b1), said external fourth shape thus being suitable for engaging in the internal fourth shape, and the third card being suitable for being retained in said second cavity under the effect of thrust against the verso face (Sv3) of the third card once said third card is wedged by said second wedging elements in said second cavity.

9. A support according to claim 8, **characterized in that** said internal second walls (3c-3c', 3d-3d') of the second cavity and said external third walls (4a-4a', 4b-4b') of the third card define a combination of:
i) second wedging elements constituted by:
i-1) said internal third shape defining a said flat internal third step (3c1) of each of said two longitudinal or respectively transverse internal second walls (3c, 3c' or 3d, 3d'), extending between and parallel to two opposite surfaces (Sr2, Sv2) of said second card (3), and extending over substantially the entire length of at least one of the two said internal second walls and at least to the ends of the other said internal second wall, arranged between a flat verso internal third riser (3c3) extending from beside the said internal third step that is closest to the center (C3) of said second cavity to the verso surface (Sv2) of said second card, and a flat recto internal third riser (3c2) extending from beside the said internal third step that is furthest from the center (C3) of said second cavity to the recto surface (Sr2) of said second card; and
i-2) said external third shape defining a flat external third step (4a1) of each of said two longitudinal or respectively transverse external third walls, arranged between a flat verso external third riser (4a3) extending beside the said external third step (4a1) that is closest to the center (C4) of said third card to the verso surface (Sv3) of said third card, and a flat recto external third riser (4a2) extending beside the said external third step that is furthest from the center (C4) of said second cavity to the recto surface (Sr3) of said third card, said recto and respectively verso external third risers (4a2, 4a3) being arranged facing and/or in abutment against said recto and respectively verso internal third risers (3c2, 3c3), said external third steps (4a1), and said internal third steps (3c1) extending, after said engagement, over substantially the same distances (h2, h3) from the opposite surfaces (Sr, Sv) of said support as said internal third steps (3c1); and
ii) second hooks constituted by:
ii-1) said projecting external fourth shape defining a respective flat said internal fourth step (3d1) of each of said two transverse or respectively longitudinal internal said second walls (3d, 3d' or 3c, 3c'), extending between and parallel to two opposite surfaces (Sr, Sv) of said second card, extending over a fraction only of the length of the said internal second walls, preferably over a substantially middle fraction, arranged between a flat verso said internal fourth riser (3d3) extending from beside the said internal fourth step that is furthest from the center (C3) of said second cavity to the verso surface (Sv2) of said second card, preferably going away from said center (C3) of the second cavity, and a flat recto said internal fourth riser (3d2) extending from beside the said internal fourth riser that is closest to the center (C3) of said second cavity to the recto surface (Sr2) of said second card going away from said second center (C3) of said second cavity; and
ii-2) said setback external fourth shape defining a flat said external fourth step (4b1) of each of the two transverse or respectively longitudinal (4b, 4b' or 4a, 4a') external third walls, arranged between a flat verso external fourth riser (4b3) extending from beside the said external fourth step that is closest to the center (C4) of said third card to the verso surface (Sv3) of said third card going towards said center of the third card, and a flat recto external fourth riser (4b2) extending from beside the said external fourth step that is furthest from the center (C4) of said third card to the recto surface (Sr3) of said third card, said recto and respectively verso external fourth risers (4b2, 4b3) being arranged facing said recto and respectively verso internal fourth risers (3d2, 3d3), said external third step (4a1) extending, after said engagement, substantially at the same distances (h2, h3) from the opposite surfaces (Sr, Sv) of said support and said internal fourth step (3d1), and said recto internal fourth riser (3d2) and said verso external fourth step (3d3) being inclined parallel at a common angle α' in the range 20° to 60° relative to the vertical so as to allow said verso external fourth riser (4b3) to slide in abutment against the recto said internal fourth riser (3d2) followed by bending of said internal second walls and external third walls including said internal and respectively external third shapes while said third card is being inserted in said second cavity by pressing against the recto face (Sr3) of said third card, prior to said engagement.

10. A support according to claim 8 or claim 9, **characterized in that**:
· said recto and verso external third risers (4a2, 4a3) extend perpendicularly to said external third step (4a1), said verso internal third riser (3c3) is arranged perpendicularly relative to said internal first step (3c3), or at an angle β1' less than 90°, preferably in the range 85° to 90°, and said recto internal third riser (3c2) slopes at an angle β2' greater than 90°, preferably in the range 92° to 98°, relative to said internal third step (3c1) ; and
· said verso internal fourth riser (3d3) extends perpendicularly relative to said internal fourth step (3d1), or at an angle β3' greater than 90°, preferably in the range 92° to 98°, and said recto external fourth riser (4b2) extends perpendicularly relative to said external fourth step (4b1) or at an angle β4' greater than 90°, preferably in the range 92° to 98°.

11. A support according to any one of claims 7 to 10, **characterized in that** it includes:
a) said first wedging elements comprising said internal first steps (2a1) of each of the two longitudinal said first walls (2a, 2a') and said external first steps (3a1) of the two longitudinal said external second walls (3a, 3a'), said internal first steps (2a1) and said external second steps (3a1) extending continuously parallel to the surface of said support over substantially the entire length respectively of one of the two longitudinal said first walls (2a, 2a') and one of the two longitudinal said external second walls (3a, 3a'), and to the ends only of the respective other ones of the longitudinal said first wall (2a, 2a') and of the longitudinal said external second wall (3a, 3a'), and preferably respectively from internal first steps (2b1) to one end only of the transverse said first walls (2b, 2b') and from external first steps (3b1) to one end only of the transverse said external second walls (3ba, 3b'); and
b) said first hooks (2b1'-2b2'-2b3', 3b1'-3b2'-3b3') extending in said transverse direction (YY') substantially over a central portion of the lengths respectively of said transverse first walls and of said transverse external second walls (3b, 3b'); and
i) second wedging elements comprising said internal third steps (3c1) of each of said longitudinal internal second walls (3c, 3c') and said external third steps (4a1) of each of the two longitudinal said external third walls (4a, 4a'), said internal third steps (3c1) and said external third steps (4a1) extending continuously parallel to the surface of said support over substantially the entire lengths respectively of the two longitudinal said internal second walls and of the two longitudinal said external third walls; and
ii) second hooks (3d1-3d2-3d3, 4b1-4b2-4b3) extending in said transverse direction (YY') substantially over central fractions of the lengths respectively of the transverse said internal second walls (3d, 3d') and of the transverse said external third walls (4b, 4b').

12. A support according to any one of claims 8 to 11, **characterized in that** said internal first, second, third, and fourth steps and said external first, second, third, and fourth steps extend substantially at the same distance h2 from the recto face of said support and preferably of said first and second cards, h2 being different from, and preferably greater than, their common distance h3 relative to the verso face of said support and preferably of said first, second, and third cards, said second hooks extending in the central fractions of the two opposite transverse walls (3d, 3d') extending over at least 10% and preferably in the range 30% to 50% of the length of said internal second walls and said preferably transverse external third walls.

13. A support according to any one of claims 8 to 12, **characterized in that** said second wedging elements are associated with third reinforcing and wedging elements comprising:
j-1) fifth steps and risers (3e) adding material laterally to a said verso internal fourth riser (3c2) beside said second cavity, having fifth steps arranged parallel to, beneath, and beside said internal fourth steps (3c1), at least two longitudinal ends of at least said longitudinal internal second wall (3c) bordering the narrowest beam (3-2) surrounding said second cavity (3-1), preferably said fifth steps and risers (3e) with corners of rounded outline (3e1) beside said second cavity (3-1) extending to the two longitudinal ends of said longitudinal internal second wall (3c) bordering said narrowest beam (3-2), and to one end of each of the two transverse said internal second walls (3d, 3d') beside the narrowest beam (3-2); and
j-2) complementary hollow shapes (4c) in the underside of said third card forming sixth steps and risers of shapes complementary to said fifth steps and risers and suitable for engaging and coming into abutment against one another; and
preferably said second wedging elements are associated with additional fourth wedging elements comprising:
jj-1) seventh steps and risers (3f) constituting additional material on a said internal fourth step (3c1) beside said second cavity, comprising seventh steps (3f) arranged parallel and above said longitudinal internal fourth steps (3c1), forming seventh steps and risers at least at the two longitudinal ends of at least said internal second wall (3c) bordering the finest beam (3-2) surrounding said second cavity (3-1); and
jj-2) complementary hollow shapes (4d) in the underside of said third card forming eighth steps and risers of shapes complementary to said seventh steps and risers and suitable for engaging with and coming into abutment against one another.

14. A method of fabricating a support according to any one of claims 1 to 13, **characterized in that** said first and second cards are each made separately by injection molding using two mold portions, preferably a movable mold portion (10) and a stationary mold portion (11), with a join plane (12) coinciding at least with said internal and external first and second steps (2a1, 2b1 and 3a1, 3b1) of the first wedging elements and said first hooks.

15. A method according to claim 14 for fabricating a support, the method being **characterized in that** it comprises said first, second, and third cards, each of which is made separately by injection molding, the second card (3) being made using two mold portions, preferably a movable mold portion (10) and a stationary mold portion (11), with a join plane (12) also coinciding at least with said internal and external third and fourth steps of the second wedging elements and said second hooks.
